# EUROPEAN PATENT APPLICATION

(11) **EP 4 810 288 A1**
(43) Date of publication of application: **23.09.2026**
(21) Application number: 24890483.1
(22) Date of filing: 28.10.2024
(51) Int. Cl.: B60K 6/36

(54) **HYBRID POWER TRANSMISSION DEVICE AND SYSTEM THEREOF, VEHICLE CONTROL METHOD, COMPUTER-READABLE STORAGE MEDIUM, VEHICLE CONTROL UNIT, AND VEHICLE**

(30) Priority: 17.11.2023 CN 202323131945 U; 17.11.2023 CN 202311549506
(71) Applicant: BYD Company Limited, Shenzhen, Guangdong 518118 (CN)
(72) Inventor: TANG, Lizhong, Shenzhen, Guangdong 518118 (CN); MU, Jinhui, Shenzhen, Guangdong 518118 (CN); LIU, Guilian, Shenzhen, Guangdong 518118 (CN); FENG, Yuyang, Shenzhen, Guangdong 518118 (CN); SONG, Ziyuan, Shenzhen, Guangdong 518118 (CN); XU, Chaocong, Shenzhen, Guangdong 518118 (CN)
(74) Representative: Taor, Simon Edward William
(86) International application number: PCT/CN2024/127910
(87) International publication number: WO 2025/103126

(57) **Abstract**

A hybrid power transmission apparatus, a hybrid power system, a vehicle control method, a computer-readable storage medium, a vehicle control unit, and a vehicle are provided. The hybrid power transmission apparatus includes an input shaft including a first shaft section for connecting to an engine and a second shaft section for connection to a first motor; and an output shaft connected to the input shaft through a first drivetrain, where the first shaft section and the second shaft section are selectively engaged or disengaged, so that the engine is decoupled from the first motor in at least one target working mode in which the engine outputs power.

## Description

### CROSS-REFERENCES TO RELATED APPLICATIONS

This application claims priorities to Chinese Patent Application No. 202311549506.3, filed with the China National Intellectual Property Administration on November 17, 2023 and entitled "VEHICLE CONTROL METHOD, COMPUTER-READABLE STORAGE MEDIUM, VEHICLE CONTROL UNIT, AND VEHICLE", and to Chinese Patent Application No. 202323131945.0, filed with the China National Intellectual Property Administration on November 17, 2023 and entitled "HYBRID POWER TRANSMISSION APPARATUS, HYBRID POWER SYSTEM, AND VEHICLE", both of which are incorporated herein by reference in their entireties.

### TECHNICAL FIELD

The present disclosure relates to the field of vehicle technologies, and specifically, to a hybrid power transmission apparatus, a hybrid power system, a vehicle control method, a computer-readable storage medium, a vehicle control unit, and a vehicle.

### BACKGROUND

Hybrid vehicles combine advantages of a dual power system of a conventional internal combustion engine and a motor. This provides efficient economical performance of fuel while reducing exhaust emissions, providing good driving experience. A hybrid power architecture of the vehicle can implement a plurality of power modes through a plurality of power sources, including simple independent driving or hybrid driving. In a related technology, an engine in a hybrid power architecture assembly cannot be completely driven independently of a motor, and drag losses occur in a motor path when the engine operates in a partial drive mode.

### SUMMARY

An objective of the present disclosure is to provide a hybrid power transmission apparatus, a hybrid power system, a vehicle control method, a computer-readable storage medium, a vehicle control unit, and a vehicle, to at least partially solve the problem existing in the related technology.

To achieve the foregoing objective, a first aspect of embodiments of the present disclosure provides a hybrid power transmission apparatus. The apparatus includes an input shaft including a first shaft section for connecting to an engine and a second shaft section for connecting to a first motor; and an output shaft connected to the input shaft through a first drivetrain, where the first shaft section and the second shaft section are selectively engaged or disengaged, so that the engine is decoupled from the first motor in at least one target working mode in which the engine outputs power.

Optionally, the hybrid power transmission apparatus further includes a first clutch that selectively engages the first shaft section with the second shaft section.

Optionally, the first drivetrain includes a first gear set connected between the first shaft section and the output shaft, and a second gear set connected between the second shaft section and the output shaft; and the first gear set and the second gear set selectively transfer power to the output shaft separately.

Optionally, the first gear set includes: a first driving gear, torsionally resistant sleeved on the first shaft section; a first driven gear that is rotationally sleeved on the output shaft and meshes with the first driving gear; and a second clutch, configured to selectively engage the first driven gear with the output shaft.

Optionally, the second gear set includes: a second driving gear, torsionally resistant sleeved on the second shaft section; a second driven gear that is rotationally sleeved on the output shaft and meshes with the second driving gear; a third driving gear, torsionally resistant sleeved on the second shaft section; a third driven gear that is rotationally sleeved on the output shaft and meshes with the third driving gear; and a first synchronizer, configured to engage at most one of the second driven gear and the third driven gear with the output shaft.

Optionally, the second gear set includes: a fourth driving gear, torsionally resistant sleeved on the second shaft section; a fourth driven gear that is rotationally sleeved on the output shaft and meshes with the fourth driving gear; and a third clutch, configured to selectively engage the fourth driven gear with the output shaft.

Optionally, the second clutch and the third clutch are integrally mounted on the output shaft.

Optionally, the first clutch is a dual clutch, and the first gear set includes: a fifth driving gear that is rotationally sleeved on the second shaft section and is selectively engaged with the first shaft section through the first clutch; and a fifth driven gear that is torsionally resistant sleeved on the output shaft and meshes with the fifth driving gear.

Optionally, the second gear set includes: a sixth driving gear, torsionally resistant sleeved on the second shaft section; a sixth driven gear that is rotationally sleeved on the output shaft and meshes with the sixth driving gear; and a second synchronizer, configured to selectively engage the sixth driven gear with the output shaft.

Optionally, the hybrid power transmission apparatus further includes: a shaft sleeve, rotationally sleeved on the first shaft section or the second shaft section; a fourth clutch that selectively engages the shaft sleeve with the first shaft section; and a fifth clutch that selectively engages the shaft sleeve with the second shaft section.

Optionally, the first drivetrain includes a third gear set connected between the shaft sleeve and the output shaft.

Optionally, the third gear set includes: a seventh driving gear, torsionally resistant sleeved on the shaft sleeve; a seventh driven gear that is rotationally sleeved on the output shaft and meshes with the seventh driving gear; an eighth driving gear, torsionally resistant sleeved on the shaft sleeve; an eighth driven gear that is rotationally sleeved on the output shaft and meshes with the eighth driven gear; and a third synchronizer, configured to engage at most one of the seventh driven gear and the eighth driven gear with the output shaft.

Optionally, one of the first shaft section and the second shaft section is rotationally sleeved on the other; and the first drivetrain includes a fourth gear set connected between the first shaft section and the output shaft, and a fifth gear set connected between the second shaft section and the output shaft; and the fourth gear set and the fifth gear set selectively transfer power to the output shaft separately.

Optionally, the first drivetrain includes a sixth clutch, configured to selectively engage an output gear that is rotationally sleeved on the output shaft with the output shaft.

Optionally, the fourth gear set includes: a ninth driving gear, torsionally resistant sleeved on the first shaft section; a ninth driven gear that is torsionally resistant sleeved on the output shaft and meshes with the ninth driving gear; and a seventh clutch, configured to selectively engage the ninth driven gear with the output shaft.

Optionally, the sixth clutch and the seventh clutch are integrally mounted on the output shaft.

Optionally, the fifth gear set includes: a tenth driving gear, torsionally resistant sleeved on the second shaft section; a tenth driven gear that is torsionally resistant sleeved on the output shaft and meshes with the tenth driving gear; and a fourth synchronizer, configured to selectively engage an input gear that is rotationally sleeved on the second shaft section with the second shaft section.

Optionally, the output shaft is configured to be connected to an axle through a second drivetrain, the second drivetrain includes a sixth gear set connected between the output shaft and the axle, and the sixth gear set includes the output gear.

A second aspect of the present disclosure provides a hybrid power system. The hybrid power system includes: an engine, a first motor, and the hybrid power transmission apparatus according to any one of the foregoing implementations.

Optionally, the hybrid power system further includes a second motor, where the engine and the first motor are configured to transfer power to a first axle; and the second motor is configured to output power to a second axle.

Optionally, the first motor is a GM motor, and the second motor is a TM motor.

A third aspect of the present disclosure provides a vehicle control method, applied to a vehicle having a hybrid power system. The hybrid power system includes an engine, a first motor, and a hybrid power transmission apparatus. The vehicle control method includes: obtaining status information of the vehicle; determining a target working mode from a plurality of preset modes based on the status information; and controlling an operating status of the hybrid power system based on the target working mode, where the engine is decoupled from the first motor in at least one target working mode in which the engine outputs power.

Optionally, the hybrid power transmission apparatus includes an input shaft including a first shaft section for connecting to the engine and a second shaft section for connecting to the first motor, where the first shaft section and the second shaft section are selectively engaged or disengaged; and when the target working mode is an engine independent drive mode, the controlling an operating status of the hybrid power system based on the target working mode includes: controlling the first shaft section to disengage from the second shaft section.

Optionally, the hybrid power transmission apparatus includes a first clutch that selectively engages the first shaft section with the second shaft section; and when the target working mode is the engine independent drive mode, the controlling an operating status of the hybrid power system based on the target working mode includes: controlling the first clutch to disengage the first shaft section from the second shaft section.

Optionally, the hybrid power transmission apparatus includes an output shaft that is connected to the input shaft through a first drivetrain; the first drivetrain includes a first gear set connected between the first shaft section and the output shaft, and a second gear set connected between the second shaft section and the output shaft; and the first gear set and the second gear set selectively transfer power to the output shaft separately; and when the target working mode is the engine independent drive mode, the controlling an operating status of the hybrid power system based on the target working mode includes: controlling power transfer between the first gear set and the output shaft, and controlling power disconnection between the second gear set and the output shaft.

Optionally, the hybrid power transmission apparatus includes: a shaft sleeve, rotationally sleeved on the first shaft section or the second shaft section; a fourth clutch that selectively engages the shaft sleeve with the first shaft section; and a fifth clutch that selectively engages the shaft sleeve with the second shaft section; and when the target working mode is the engine independent drive mode, the controlling an operating status of the hybrid power system based on the target working mode includes: controlling the fourth clutch to engage the shaft sleeve with the first shaft section and controlling the fifth clutch to disengage the shaft sleeve from the second shaft section.

Optionally, the first drivetrain includes a sixth clutch, configured to selectively engage an output gear that is rotationally sleeved on the output shaft with the output shaft; and when the target working mode is the engine independent drive mode, the controlling an operating status of the hybrid power system based on the target working mode includes: controlling the sixth clutch to engage the output gear with the output shaft.

Optionally, the hybrid power system further includes a second motor, where the engine and the first motor are configured to transfer power to a first axle; and the second motor is configured to output power to a second axle; and when the target working mode is a four-wheel drive parallel mode, the controlling an operating status of the hybrid power system based on the target working mode includes: controlling the first shaft section to disengage from the second shaft section, controlling the engine to drive the first axle, and controlling the second motor to drive the second axle.

Optionally, the status information includes an SOC value of a battery, required power of a wheel end, and required torque of the wheel end; and the determining a target working mode from a plurality of preset modes based on the status information includes: determining the target working mode based on the SOC value, the required power, and the required torque.

According to a fourth aspect of embodiments of the present disclosure, a computer-readable storage medium storing a computer program is provided. When the program is executed by a processor, the steps of the vehicle control method provided in the first aspect of the present disclosure are implemented.

According to a fifth aspect of embodiments of the present disclosure, a vehicle control unit is provided. The vehicle control unit includes: a memory, storing a computer program; and a processor, configured to execute the computer program in the memory, to implement the steps of the vehicle control method provided in the first aspect of the present disclosure.

According to a sixth aspect of embodiments of the present disclosure, a vehicle is provided. The vehicle includes the hybrid power system provided in the second aspect of the present disclosure or the vehicle control unit provided in the fifth aspect of embodiments of the present disclosure.

According to the foregoing technical solutions, the input shaft is divided into two parts: the first shaft section and a second shaft section respectively connected to the engine and the first motor, or respectively connected to the first motor and the engine. In this case, when the first shaft section is disengaged from the second shaft section, the first motor does not work and the engine drives independently, power of the engine is not transferred to the motor, thereby avoiding drag losses in a motor path.

Other features and advantages of the present disclosure will be described in detail in the following specific implementations.

### DESCRIPTION OF DRAWINGS

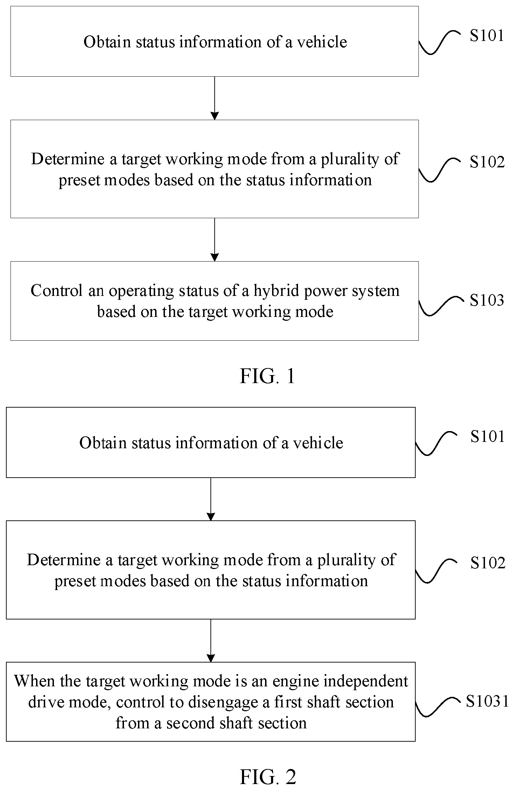

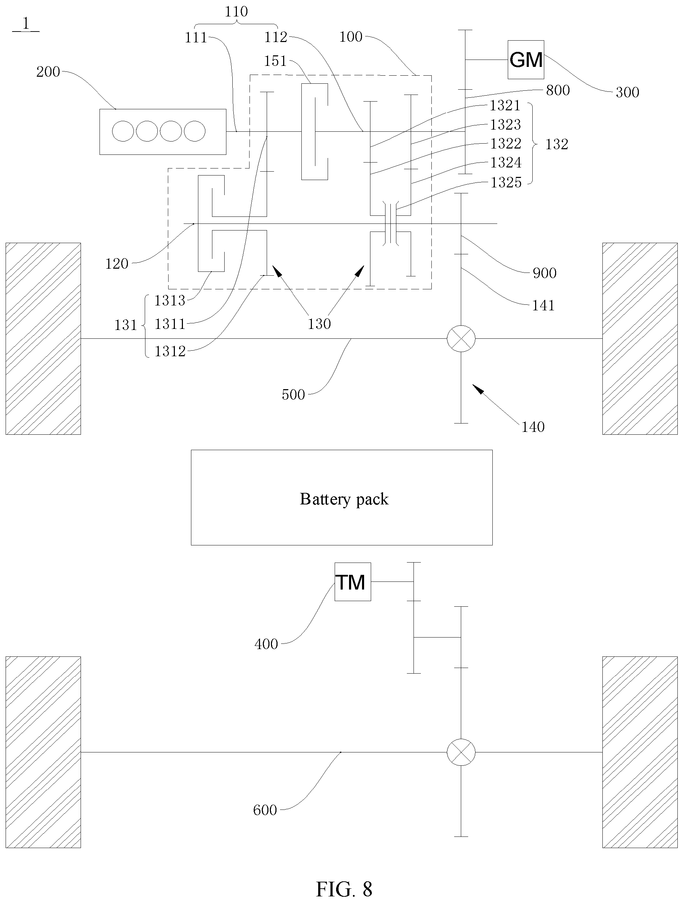

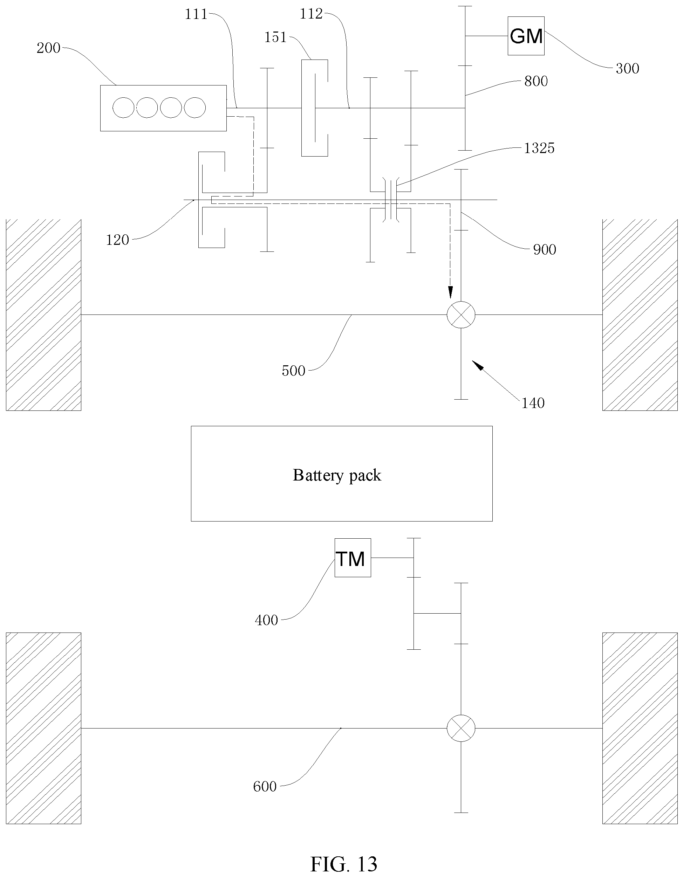

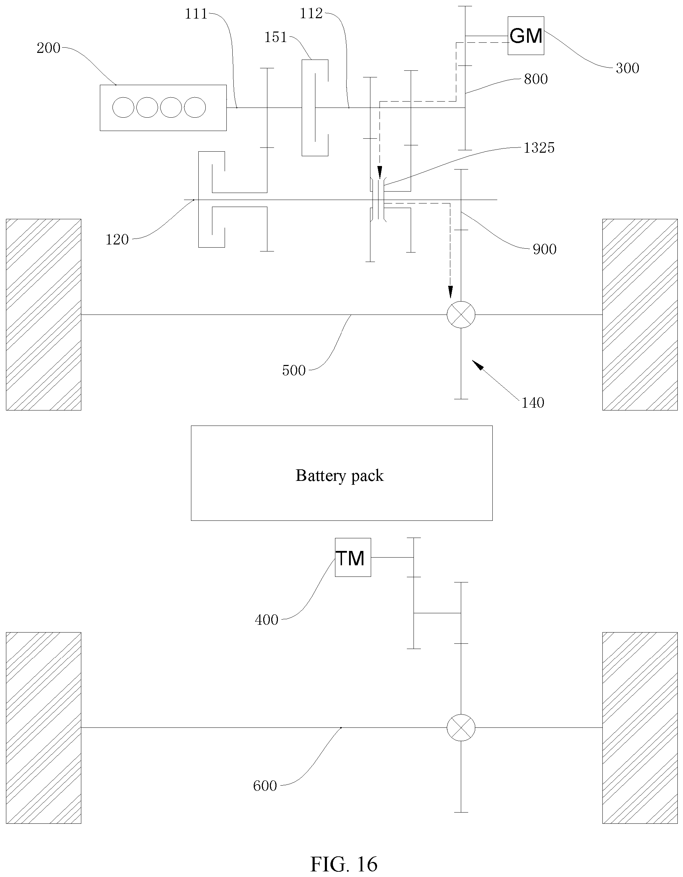

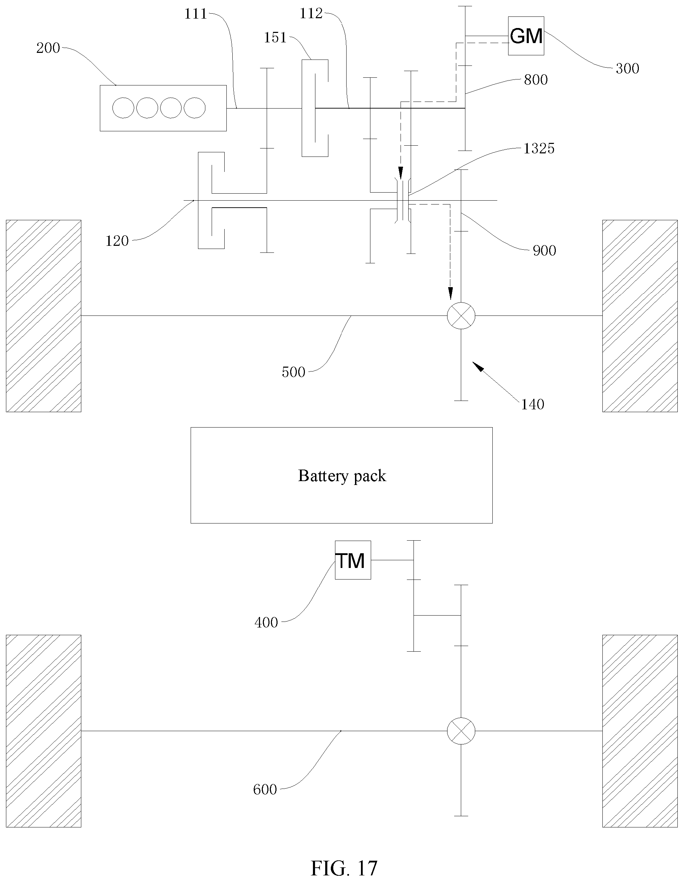

The accompanying drawings are intended to provide a further understanding of the present disclosure, form a part of this specification, and together with the following specific implementations, are used to explain the present disclosure, but do not constitute a limitation on the present disclosure. In the accompanying drawings:
Each of FIG. 1 to FIG. 7 is a flowchart of a control method according to an example embodiment;
each of FIG. 8 to FIG. 12 is a diagram of a structure of a hybrid power transmission apparatus according to an example embodiment;
each of FIG. 13 to FIG. 15 is a diagram of a power transmission path of an engine independent drive mode according to the embodiment shown in FIG. 1;
each of FIG. 16 and FIG. 17 is a diagram of a power transmission path of a first motor independent drive mode according to the embodiment shown in FIG. 1;
each of FIG. 18 to FIG. 21 is a diagram of a power transmission path of a dual-drive parallel mode according to the embodiment shown in FIG. 1;
FIG. 22 is a diagram of a power transmission path of a second motor independent drive mode according to the embodiment shown in FIG. 1;
FIG. 23 is a diagram of a power transmission path of a pure-electric four-wheel drive parallel mode according to the embodiment shown in FIG. 1;
each of FIG. 24 and FIG. 25 is a diagram of a power transmission path of a hybrid four-wheel drive parallel mode according to the embodiment shown in FIG. 1;
FIG. 26 is a diagram of a power transmission path of a parking power generation mode according to the embodiment shown in FIG. 1;
FIG. 27 is a diagram of a power transmission path of a series mode according to the embodiment shown in FIG. 1; and
FIG. 28 is a block diagram of a vehicle control unit according to an example embodiment.

### DESCRIPTION OF EMBODIMENTS

The following describes in detail specific implementations of the present disclosure with reference to accompanying drawings. It should be understood that the specific implementations described herein are only used to illustrate and explain the present disclosure and are not intended to limit the present disclosure.

In the present disclosure, unless otherwise stated, the positional terms such as "front" and "back" are defined based on a normal traveling direction of a vehicle. In addition, the terms such as "first" and "second" in the present disclosure are intended to distinguish one element from another, and are not sequential or important. "Connection" in embodiments of the present disclosure may mean direct connection or indirect connection when there is no contradiction. When the following description relates to the accompanying drawings, unless specified otherwise, same numbers in different accompanying drawings represent a same or similar element.

Embodiments of the present disclosure provide a hybrid power transmission apparatus, a hybrid power system, a vehicle control method, a computer-readable storage medium, a vehicle control unit, and a vehicle. The hybrid power system provided in an embodiment of the present disclosure may include an engine 200, a first motor 300, and the hybrid power transmission apparatus 100. The vehicle control method may be applied to a vehicle 1 having a hybrid power system. The vehicle control unit may include a memory and a processor. The processor may execute a computer program in a computer-readable storage medium to implement the foregoing vehicle control method. The following describes in detail the solutions from a perspective of the vehicle control method.

An embodiment of the present disclosure provides a vehicle control method. As shown in FIG. 1, the method may be applied to a vehicle 1 having a hybrid power system. The hybrid power system includes an engine 200, a first motor 300, and a hybrid power transmission apparatus 100. The control method includes the following steps:
In step S101, status information of the vehicle 1 is obtained.
In step S102, a target working mode is determined from a plurality of preset modes based on the obtained status information of the vehicle.
In step S103, an operating status of the hybrid power system is controlled based on the target working mode, where the engine 200 is decoupled from the first motor 300 in at least one target working mode in which the engine 200 outputs power included in the plurality of preset modes.

Herein, that the engine 200 may be decoupled from the first motor 300 means that the engine 200 may operate independently relative to first motor 300, without interfering with each other, and power of the engine 200 is not transferred to the first motor 300, thereby avoiding drag losses. A decoupling action between the engine 200 and the first motor 300 may be implemented by disposing a clutch as described below, or the like. Certainly, during specific configuration, another structure may be used for assistance and cooperation. Because the engine 200 can independently drive relative to the first motor 300, when the engine 200 is decoupled from the first motor 300, operation of the engine 200 does not cause drag losses in a motor path.

According to some embodiments, the obtained status information of the vehicle may include an SOC (state of charge, state of charge) value of a battery, required power of a wheel end, and required torque of the wheel end. After a system obtains the SOC value, the required power, and the required torque of the vehicle 1, the system may perform matching the status information and the plurality of preset modes, to execute a required target working mode, and further control the operating status of the hybrid power system. Further, the status information of the vehicle 1 includes but is not limited to the SOC value, the required power, and the required torque, and may further include status information that needs to be monitored during operation of the vehicle 1, such as a current vehicle speed, current output torque, and gravity change sensing (for detecting a climbing status) of the vehicle 1. Content included in the status information is not specifically limited herein. It may be considered that the status information of the vehicle in embodiments of the present disclosure may include conventional status information of a vehicle in a conventional technology.

The hybrid power system in this embodiment of the present disclosure may further include a second motor 400. The engine 200 and the first motor 300 may transmit power to a first axle 500, and the second motor 400 may transmit power to a second axle 600. It should be noted that, a drive relationship of the engine 200, the first motor 300, and the second motor 400 with respect to a front wheel and a rear wheel is not limited in the present disclosure. That is, the engine 200 and the first motor 300 may be configured to drive the front wheel, and the second motor 400 may be configured to drive the rear wheel; or the engine 200 and the first motor 300 may be configured to drive the rear wheel, and the second motor 400 may be configured to drive the front wheel. For ease of description, in this embodiment of the present disclosure, an example in which the engine 200 and the first motor 300 are configured to drive the front wheel, and the second motor 400 is configured to drive the rear wheel is used for description.

In some embodiments, the first motor 300 may use a GM motor (Generator Motor) as a power output motor or a generator, and the second motor 400 may use a TM motor (Traction Motor) as a drive motor. Both the GM motor and the TM motor are common configuration in the field, and specific structures are not described herein again.

The vehicle 1 may have a plurality of preset modes depending on structure disposition of the hybrid power transmission apparatus, and whether a working mode of the vehicle 1 includes a rear-wheel drive mode or a four-wheel drive mode may be determined based on whether existence of the second motor 400. The plurality of preset modes may include a plurality of the following modes: an engine independent drive mode, a first motor independent drive mode, a second motor independent drive mode, a dual-drive parallel mode, a four-wheel drive mode, a parking power generation mode, a series mode, and an energy regeneration mode.

In the engine independent drive mode, the engine 200 outputs power, the first motor 300 does not work, the second motor 400 does not work, and the power of the engine 200 is transferred to the first axle 500. In the first motor independent drive mode, the engine 200 does not work, the first motor 300 outputs power, the second motor 400 does not work, and the power of the first motor 300 is transferred to the first axle 500. In the second motor independent drive mode, the engine 200 and the first motor 300 do not work, the second motor 400 outputs power, and the power of the second motor 400 is transferred to the second axle 600. In the dual-drive parallel mode, the engine 200 outputs power, the first motor 300 outputs power, the second motor 400 does not work, and the power of the engine 200 and the first motor 300 is jointly transferred to the first axle 500. In the four-wheel drive mode, the engine 200 and the first motor 300 separately output power independently or simultaneously, the second motor 400 outputs power, the power of the engine 200 and the first motor 300 is transferred to the first axle 500, and the power of the second motor 400 is transferred to the second axle 600. This can implement a four-wheel drive parallel mode and a pure-electric four-wheel drive mode. In the parking power generation mode, the engine 200 outputs power, the first motor 300 receives energy, the second motor 400 does not work, and the power of the engine 200 is transferred to the first motor 300. In the series mode, the engine 200 outputs power, the first motor 300 receives energy, the second motor 400 outputs power, the power of the engine 200 is transferred to the first motor 300, and the power of the second motor 400 is transferred to the second axle 600. In the energy regeneration mode, when the system detects coasting, deceleration, or braking of the vehicle 1, the system may control the first axle 500 or the second axle 600 and a related power device, to convert excess energy output by the engine 200, the first motor 300, or the second motor 400, and kinetic energy in all transmission members in the system into electrical energy, and finally feed the electrical energy back to a battery pack to implement energy regeneration. Given that related structure disposition of the energy regeneration mode is common configuration in this field, a specific structure of the energy regeneration mode is not described herein again.

In modes corresponding to the following embodiments, a control method of the vehicle 1 is described by using an example in which the system has the second motor 400.

The target working mode may be determined based on different working conditions of the vehicle 1. First, the SOC value is obtained. For example, when the SOC is greater than a first threshold, the state of charge of the battery is sufficient, and a form of electric drive is preferentially used. For example, when the vehicle 1 is in a low-speed state, the required power and the required torque of the wheel end are small. In this case, the vehicle 1 may work in only the first motor independent drive mode or the second motor drive mode. If the vehicle 1 needs to travel at a high speed, the required power and the required torque of the wheel end are large, and the engine 200 or another motor may contribute to power output.

When the SOC value is less than or equal to the first threshold, the state of charge of the battery is insufficient, and the engine 200 may output energy as a main power source, or the parking power generation mode or the series mode may be performed, to charge the first motor 300 through the engine 200.

Certainly, a plurality of thresholds may be set for the SOC, and corresponding modes may be selected for different ranges. Details are not described herein again.

For example, when the state of charge is sufficient and the vehicle travels at a constant speed on an urban road, the pure-electric drive mode can meet a requirement. However, when the vehicle climbs in a mountainous area or accelerates on a high-speed road, the required power and the required torque of the wheel end increase. If only one motor is used for drive, a wheel-end requirement may not be met. In this case, a VCU (Vehicle control unit, vehicle control unit) receives the requirement, and then enables the engine 200 or the another motor to participate in drive. However, whether the engine 200 or the another motor participates in drive depends on an actual most economical fuel consumption range of the engine and a highest efficiency range of the motor.

To match the plurality of target working modes, the operating status of the hybrid power system may be implemented in the following plurality of manners.

As shown in FIG. 8 to FIG. 12, the hybrid power transmission apparatus 100 provided in this embodiment of the present disclosure may include an input shaft 110, an output shaft 120, a first drivetrain 130, an engine 200, and a first motor 300. The input shaft 110 may be connected to the output shaft 120 through the first drivetrain 130. The input shaft 110 further includes a first shaft section 111 connected to the engine 200 and a second shaft section 112 connected to the first motor 300. The first shaft section 111 and the second shaft section 112 may be selectively engaged or disengaged, so that the engine 200 is decoupled from the first motor 300 in at least one target working mode in which the engine 200 outputs power. In this implementation, the first shaft section 111 and the second shaft section 112 may be engaged or disengaged as required by the working mode, to connect or disconnect the engine 200 or the first motor 300 to or from a transmission path. This further combines power output by the engine 200 and the first motor 300, to meet power requirements of different working modes.

As shown in FIG. 2, after step S102 is performed, when the matched target working mode is the engine independent drive mode, step S1031 may be performed, that is, the first shaft section 111 may be controlled to disengage from the second shaft section 112, so that operation of the engine 200 connected to the first shaft section 111 does not cause drag losses to the first motor 300.

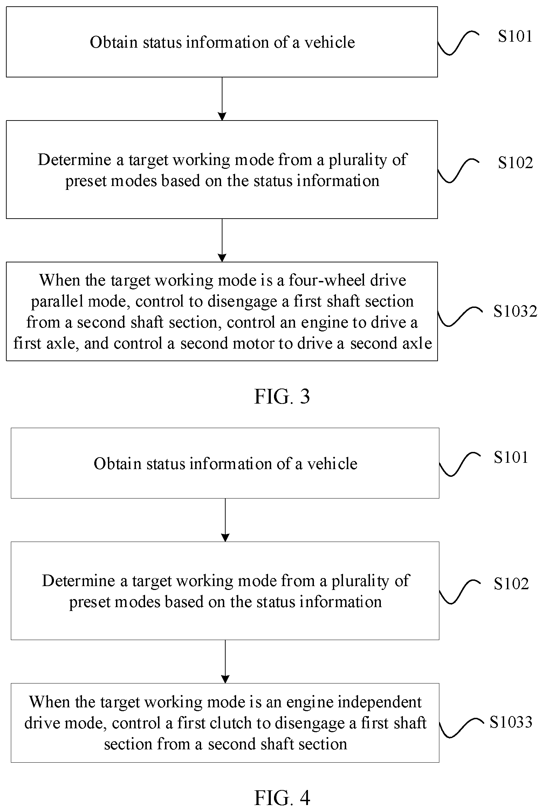

As shown in FIG. 3, after step S102 is performed, when the matched target working mode is the four-wheel drive parallel mode, step S1032 may be performed, that is, the first shaft section 111 may be controlled to disengage from the second shaft section 112, the engine 200 may be controlled to drive the first axle 500, and the second motor 400 may be controlled to drive the second axle 600. In this implementation, the engine 200 may drive the first axle 500 to implement front-wheel drive, and the second motor 400 may drive the second axle 600 to implement rear-wheel drive. Further, the first motor 300 may also drive the first axle 500. In this case, similar to the engine independent drive mode, the first shaft section 111 is disengaged from the second shaft section 112, and therefore, operation of the engine 200 does not cause drag losses to the first motor 300, thereby effectively improving energy utilization efficiency and reducing losses.

### First implementation

In this implementation, a clutch may be disposed on the input shaft 110 to divide the input shaft 110 into two shaft sections that may be selectively connected together, and the two shaft sections are connected to different power sources (for example, the engine 200 and the first motor 300), to ensure that the different power sources are independent of each other and do not interfere with each other when outputting power. This effectively avoids occurrence of drag losses between the different power sources, reduces energy losses, and saves energy.

According to some embodiments, as shown in FIG. 4 and FIG. 8 to FIG. 10, the hybrid power transmission apparatus 100 may include a first clutch 151 that selectively engages the first shaft section 111 with the second shaft section 112. The first clutch 151 enables communication between the first shaft section 111 and the second shaft section 112 when engaged, and can further separate the first shaft section 111 from the second shaft section 112 when disengaged. As shown in FIG. 4, after step S102 is performed, when the matched target working mode is the engine independent drive mode, step S1033 may be performed, that is, the first clutch 151 may be controlled to disengage the first shaft section 111 from the second shaft section 112, so that operation of the engine 200 connected to the first shaft section 111 does not cause drag losses to the first motor 300.

For example, as shown in FIG. 8 to FIG. 10, the first drivetrain 130 may include a first gear set 131 and a second gear set 132. The first gear set 131 is connected between the first shaft section 111 and the output shaft 120, and the second gear set is connected between the second shaft section 112 and the output shaft 120. The two gear sets can selectively transmit power from connected different power sources to the output shaft 120.

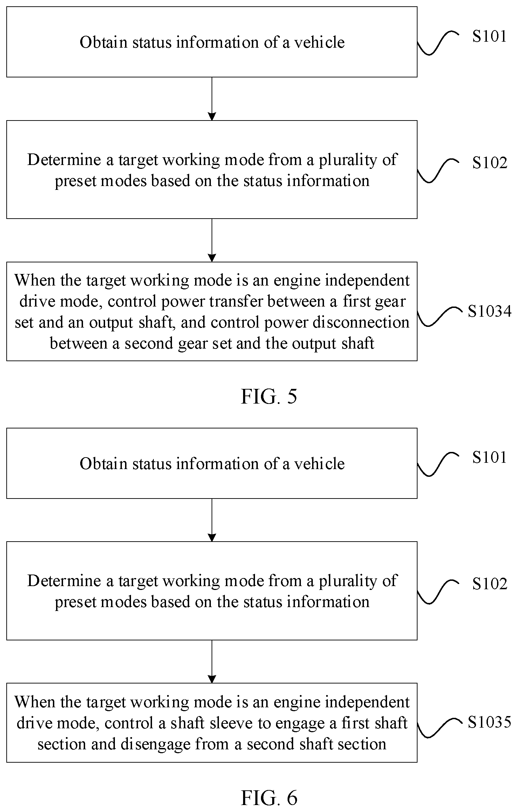

As shown in FIG. 5, after step S102 is performed, when the matched target working mode is the engine independent drive mode, step S1034 may be performed, that is, the first gear set 131 may be controlled to transmit power to the output shaft 120, and power disconnection between the second gear set 132 and the output shaft 120 may be controlled, so that power of the engine 200 may be transferred to the output shaft 120 through the first gear set 131, and it is ensured that the power transferred by the engine 200 to the output shaft 120 does not affect the first motor 300 through the second gear set 132.

### Embodiment 1

As shown in FIG. 8, a first gear set 131 may include a first driving gear 1311, a first driven gear 1312, and a second clutch 1313. The first driving gear 1311 may be torsionally resistant sleeved on a first shaft section 111, and the first driven gear 1312 may be rotationally sleeved on an output shaft 120 and mesh with the first driving gear 1311. The second clutch 1313 can selectively engage the first driven gear 1312 with the output shaft 120. When the second clutch 1313 is engaged, the first driving gear 1311 and the first driven gear 1312 that mesh with the first driving gear 1311 may transmit power of an engine 200 to the output shaft 120, to meet an independent drive condition of the engine 200. In addition, in a process in which the engine 200 transmits the power to the output shaft 120 through the first gear set 131, the engine 200 does not cause drag losses to a path of a first motor 300, thereby reducing system energy consumption and saving energy. It should be understood that "torsional resistance" means that there is no relative twisting or rotation between two components, and "torsionally resistant" sleeving described herein and in the following means that two structural elements in a sleeved relationship are connected without generating relative rotation.

As shown in FIG. 8, a second gear set 132 may include a second driving gear 1321, a second driven gear 1322, a third driving gear 1323, a third driven gear 1324, and a first synchronizer 1325. The second driving gear 1321 and the third driving gear 1323 are torsionally resistant sleeved on a second shaft section 112. The second driven gear 1322 and the third driven gear 1324 are rotationally sleeved on the output shaft 120, and mesh with the second driving gear 1321 and the third driving gear 1323 respectively. The first synchronizer 1325 can only engage the second driven gear 1322 or the third driven gear 1324 with the output shaft 120 at any given time. In this implementation, transmission ratios between one set including the second driving gear 1321 and the second driven gear 1322 and one set including the third driving gear 1323 and the third driven gear 1324 are different. When power is separately transferred to the output shaft 120 through the two sets, different gear modes in a target working mode are produced. The first synchronizer 1325 can engage either set, to implement gear position shifting in the target working mode. Herein, gear position switching of the first synchronizer 1325 may be implemented by transmitting power to the output shaft 120 by using the second shaft section 112 through different transmission gear sets. In this embodiment of the present disclosure, gear position setting for a first gear and a second gear is not specifically limited. Further, the second gear set 132 may alternatively have more transmission gear sets to increase a quantity of gear positions. Herein, a quantity of gear positions is not specifically limited. In this embodiment of the present disclosure, the target working mode is described by using an example in which the quantity of gear positions is 2.

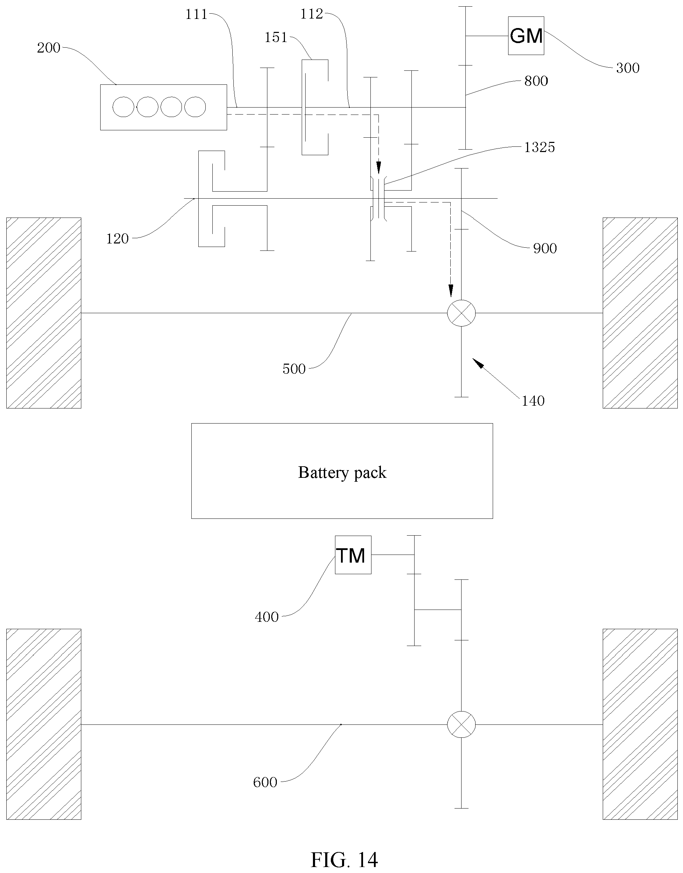

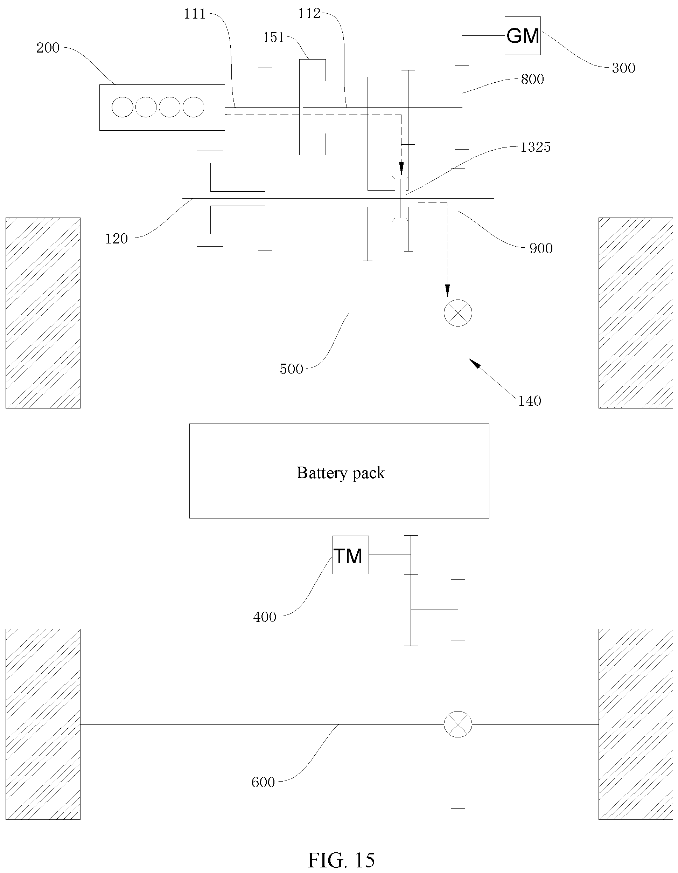

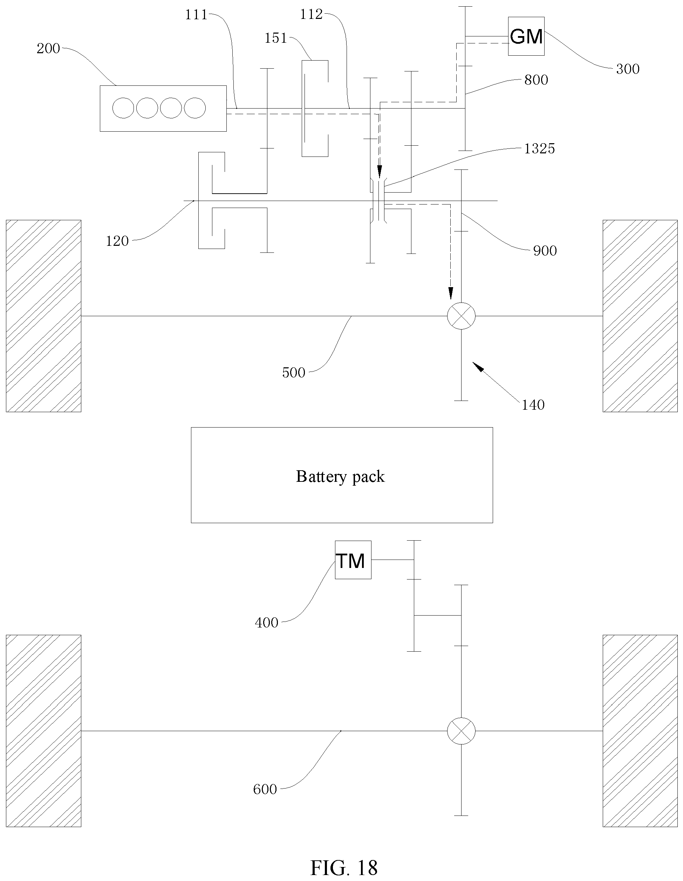

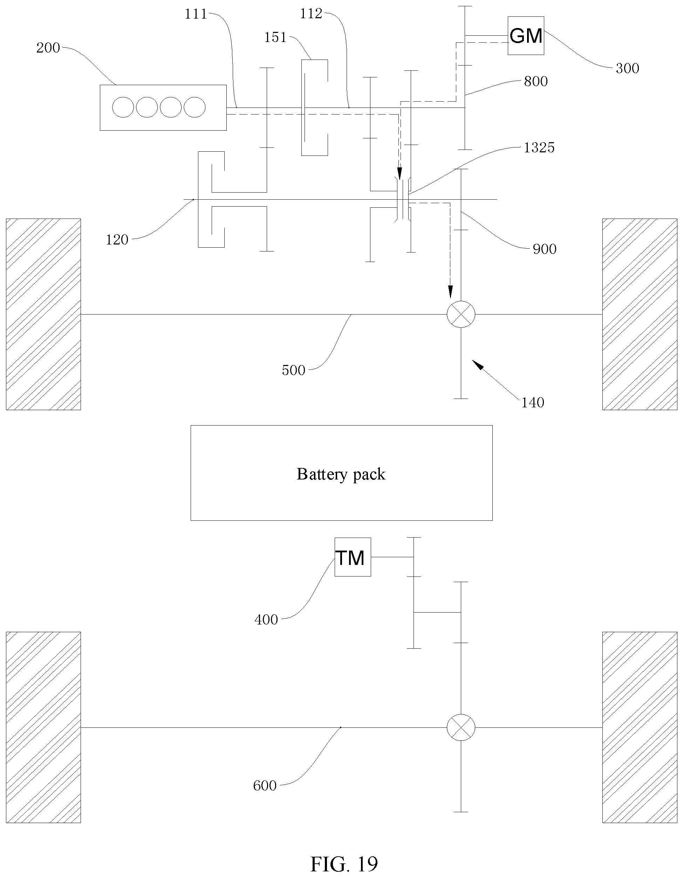

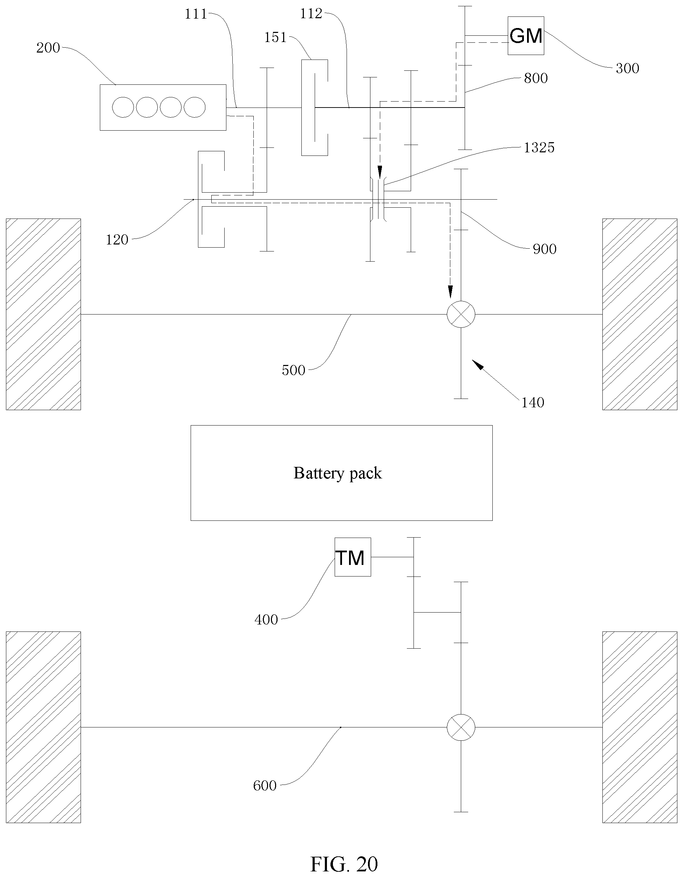

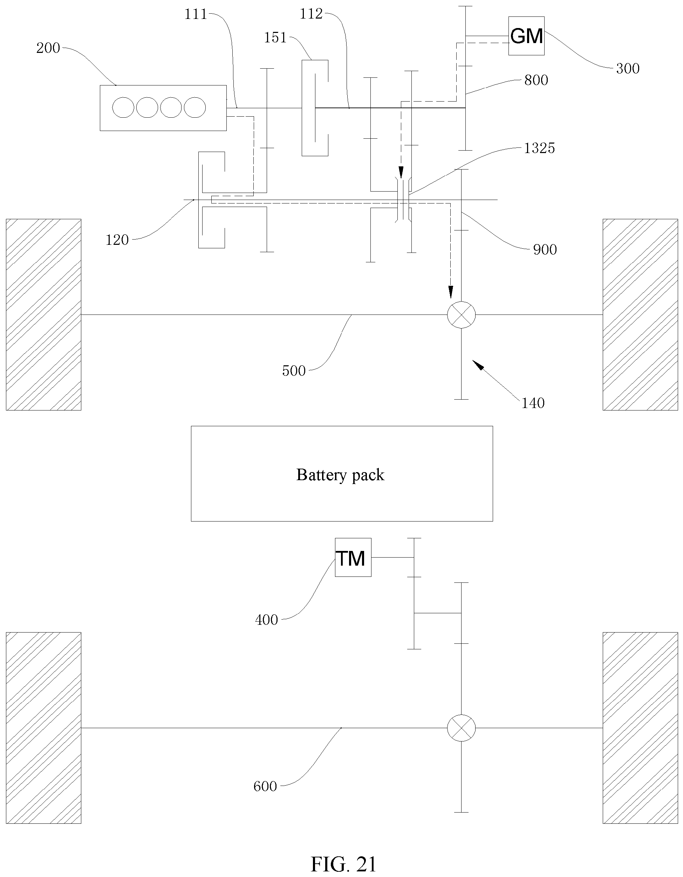

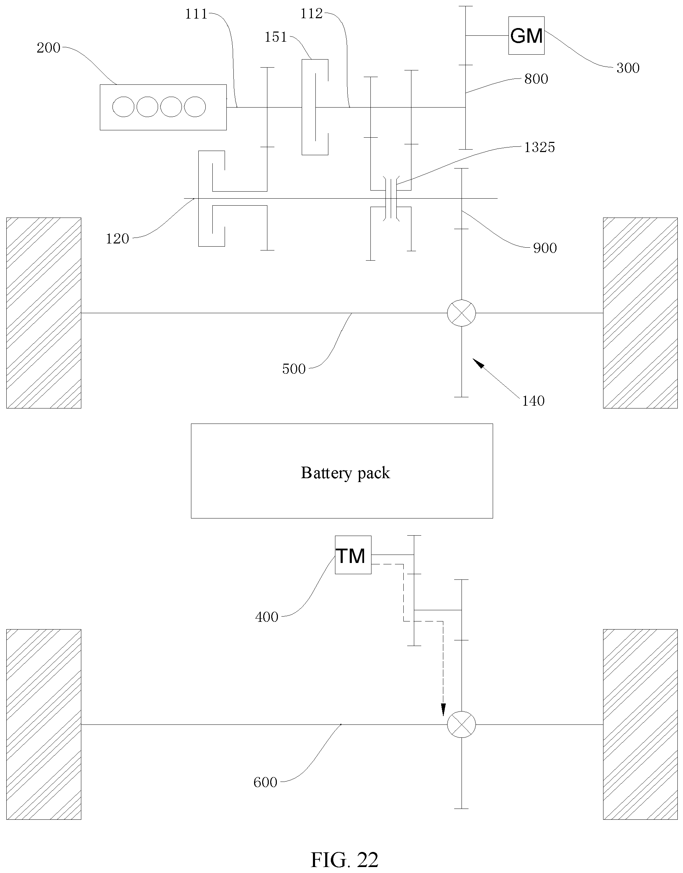

According to this embodiment, refer to FIG. 8 and FIG. 13 to FIG. 27. In an engine independent drive mode, the first clutch 151 is disengaged, the second clutch 1313 is engaged, the first synchronizer 1325 is in a neutral state (that is, neither the second driven gear 1322 nor the third driven gear 1324 engages the output shaft 120), and a power transmission path is shown in FIG. 13. The engine independent drive mode further includes an engine first gear drive mode. In this case, the first clutch 151 is engaged, the second clutch 1313 is disengaged, the first synchronizer 1325 is positioned in a first gear position, and a power transmission path is shown in FIG. 14. The engine independent drive mode also includes an engine second gear drive mode. In this case, the first clutch 151 is engaged, the second clutch 1313 is disengaged, the first synchronizer 1325 is positioned in a second gear position, and a power transmission path is shown in FIG. 15. In a first motor independent drive mode, the first clutch 151 is engaged, the second clutch 1313 is disengaged, the first synchronizer 1325 is positioned in the first gear position, and a power transmission path is shown in FIG. 16. The first motor independent drive mode may further include a first motor second gear drive mode. In this case, the first clutch 151 is engaged, the second clutch 1313 is disengaged, the first synchronizer 1325 is positioned in the second gear position, and a power transmission path is shown in FIG. 17. In a dual-drive parallel mode, the first clutch 151 is engaged, the second clutch 1313 is disengaged, the first synchronizer 1325 is positioned in the first gear position, and a power transmission path is shown in FIG. 18. This mode may also be referred to as dual-drive parallel first gear drive mode. The dual-drive parallel mode may further include a dual-drive parallel second gear drive mode. In this case, the first clutch 151 is engaged, the second clutch 1313 is disengaged, the first synchronizer 1325 is positioned in the second gear position, and a power transmission path is shown in FIG. 19. Gear position switching in the dual-drive parallel mode may also be completed by only switching an output path of the first motor 300. In this case, the first clutch 151 is disengaged, the second clutch 1313 is engaged, power output by the engine 200 is transferred to a first axle 500 through the second clutch 1313, and power output by the first motor 300 is adjusted by the first synchronizer 1325 and transferred to the output shaft 120. The power of the engine 200 and the first motor 300 is then transferred to the first axle 500 simultaneously. The first synchronizer 1325 may switch between the first gear and the second gear as required. Power transmission paths are shown in FIG. 20 and FIG. 21. In a second motor independent drive mode, the first clutch 151 is disengaged, the second clutch 1313 is disengaged, the first synchronizer 1325 is in the neutral state, and a power transmission path is shown in FIG. 22.

In a four-wheel drive mode, rear-wheel drive is implemented by the second motor 400 outputting power, rear-wheel drive may operate in different output modes due to structure disposition of hybrid transmission. Herein, a pure-electric four-wheel drive parallel mode and a hybrid four-wheel drive parallel mode in which the first synchronizer 1325 is always positioned in the first gear are used as examples for description. During actual use, a gear position may be switched as required, and the four-wheel drive mode may alternatively be implemented by enabling the engine to independently drive a front wheel. Details are not described herein again.

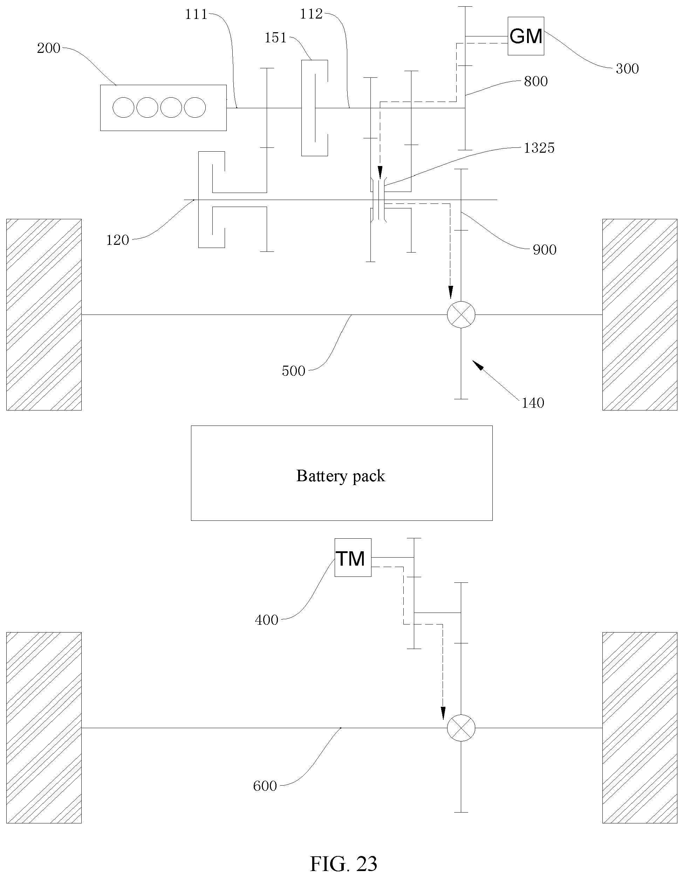

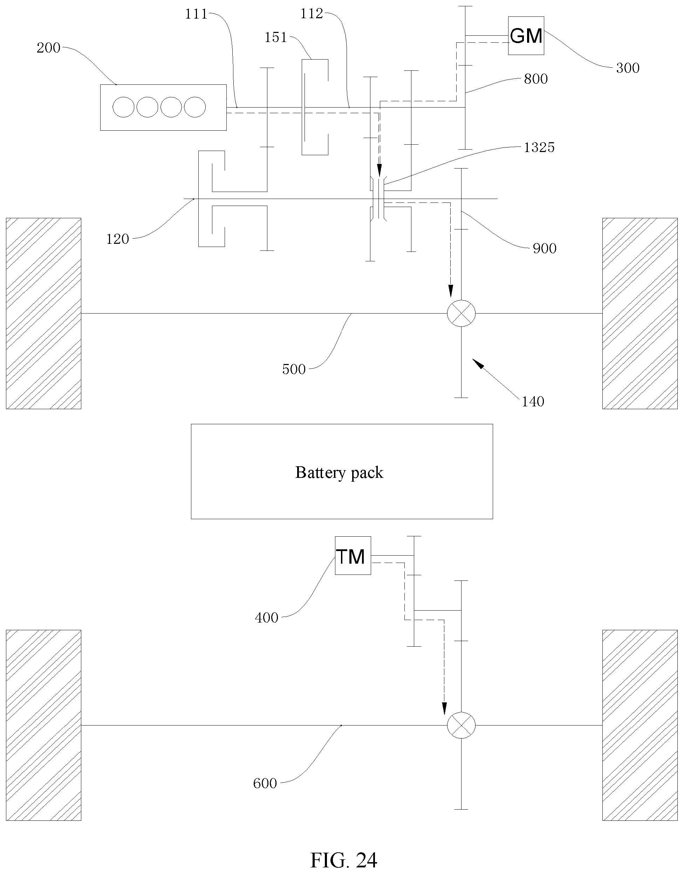

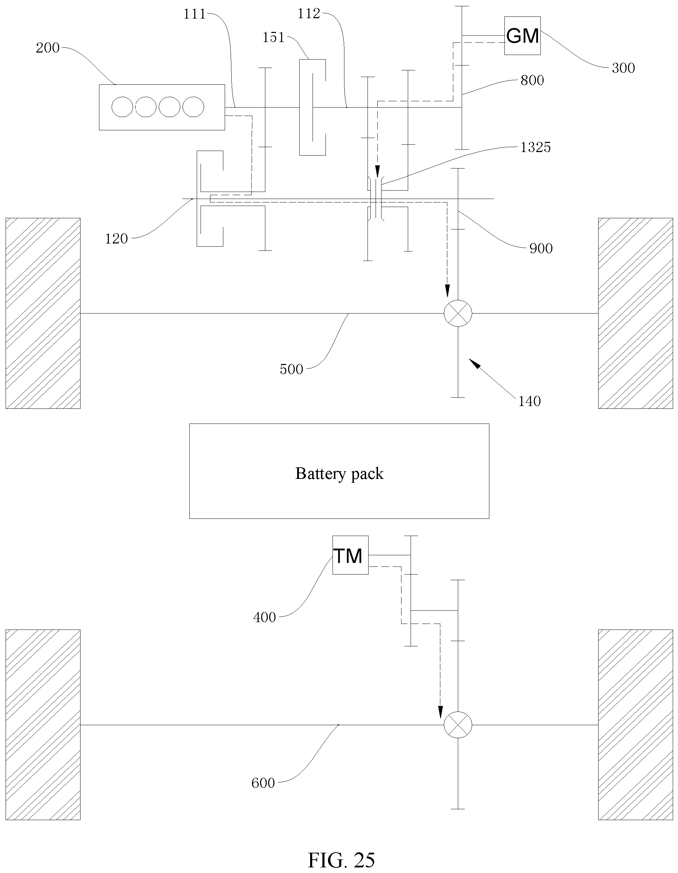

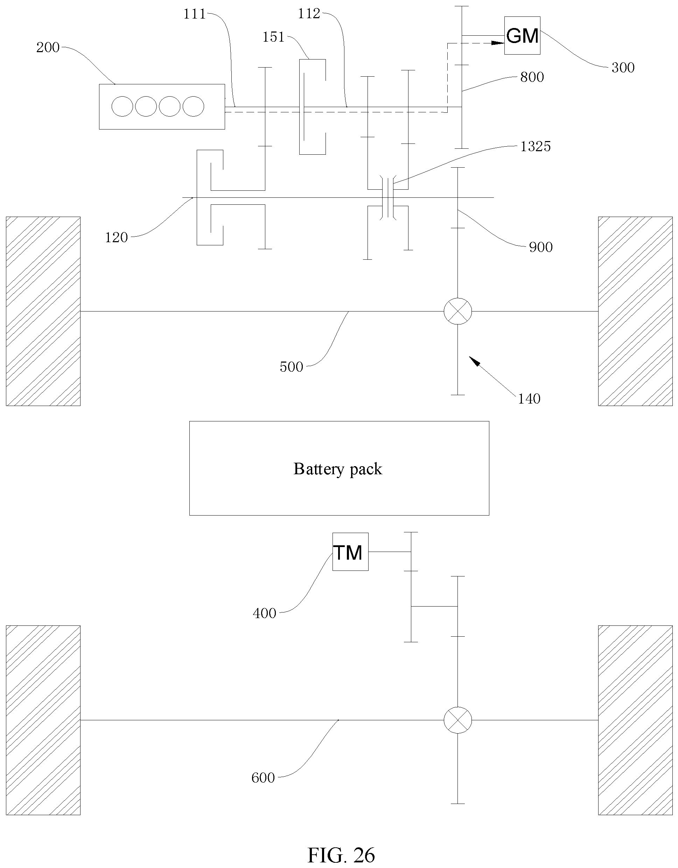

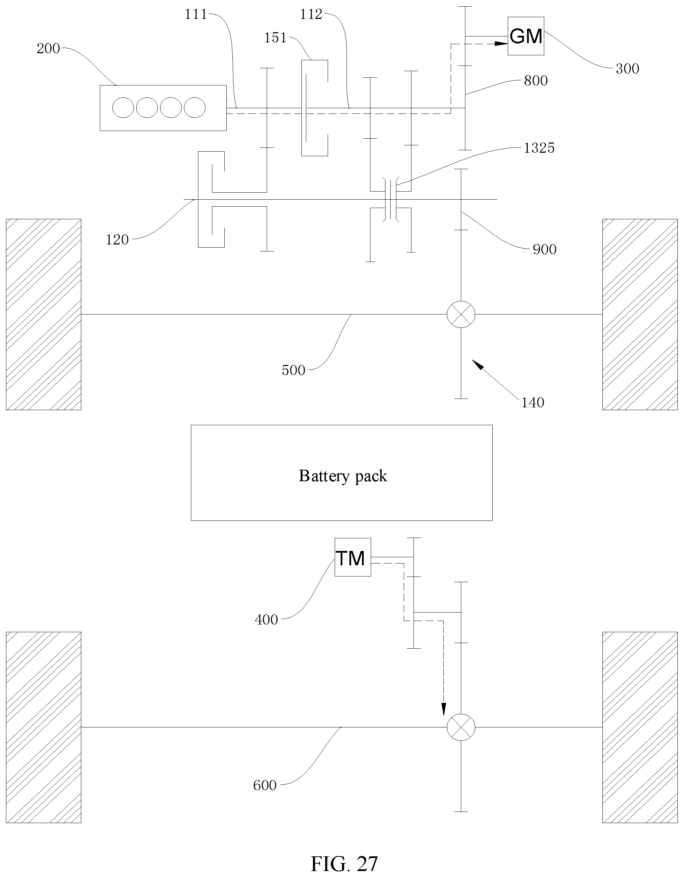

In the pure-electric four-wheel drive parallel mode, the first clutch 151 is disengaged, the second clutch 1313 is disengaged, the first synchronizer 1325 is positioned in the first gear position, and a power transmission path is shown in FIG. 23. In the hybrid four-wheel drive parallel mode, the first clutch 151 is engaged, the second clutch 1313 is disengaged, the first synchronizer 1325 is positioned in the first gear position, and a power transmission path is shown in FIG. 24. In the hybrid four-wheel drive parallel mode, the first clutch 151 is disengaged, the second clutch 1313 is engaged, the first synchronizer 1325 is positioned in the first gear position, and a power transmission path is shown in FIG. 25. In a parking power generation mode, the first clutch 151 is engaged, the second clutch 1313 is disengaged, the first synchronizer 1325 is in the neutral state, and a power transmission path is shown in FIG. 26. In a series mode, the first clutch 151 is engaged, the second clutch 1313 is disengaged, the first synchronizer 1325 is in the neutral state, and a power transmission path is shown in FIG. 27.

It should be noted that configuration of the clutch, synchronizer, and the like in the foregoing modes is only a feasible manner, and is not necessarily unique. For example, in the second motor independent drive mode, the first clutch 151, the second clutch 1313, and the first synchronizer 1325 may all engage related components, but this engagement is not necessary because the first motor 300 and the engine 200 do not output power. A similar case also exists in the following embodiments. Details are not described again.

Correspondingly, as shown in FIG. 4, after step S102 is performed, when the matched target working mode is the engine independent drive mode, step S1033 may be performed, that is, the first clutch 151 may be controlled to disengage the first shaft section 111 from the second shaft section 112, so that operation of the engine 200 connected to the first shaft section 111 does not cause drag losses to the first motor 300.

In step S1033, more specifically, the first clutch 151 is controlled to disengage, the second clutch 1313 is controlled to engage the first driven gear 1312 with the output shaft 120, and the first synchronizer 1325 is controlled to be in the neutral state (that is, the first synchronizer 1325 does not engage the second driven gear 1322 or the third driven gear 1324). In this case, power output by the engine 200 is transferred from the first gear set 131 to the output shaft 120, and the power transferred by the engine 200 does not interfere with the first motor 300, thereby avoiding occurrence of drag losses in a motor path. Herein, only an example in which the first gear set 131 transmits the power of the engine 200 is used for description. Similarly, a same principle exists in the engine first gear drive mode and the engine second gear drive mode. Details are not described herein again.

### Embodiment 2

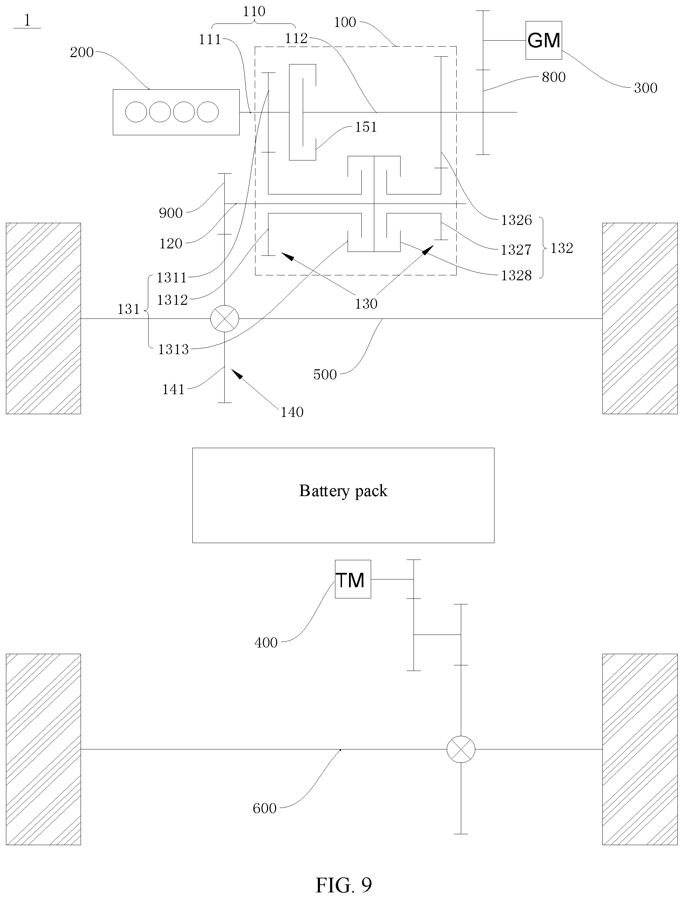

As shown in FIG. 9, a first gear set 131 may include a first driving gear 1311, a first driven gear 1312, and a second clutch 1313. The first driving gear 1311 may be torsionally resistant sleeved on a first shaft section 111, and the first driven gear 1312 may be rotationally sleeved on an output shaft 120 and mesh with the first driving gear 1311. The second clutch 1313 can selectively engage the first driven gear 1312 with the output shaft 120.

Specifically, a second gear set 132 may include a fourth driving gear 1326, a fourth driven gear 1327, and a third clutch 1328, where the fourth driving gear 1326 is torsionally resistant sleeved on a second shaft section 112, the fourth driven gear 1327 is rotationally sleeved on the output shaft 120 and meshes with the fourth driving gear 1326, and the third clutch 1328 can selectively engage the fourth driven gear 1327 with the output shaft 120.

As shown in FIG. 9, the second clutch 1313 and the third clutch 1328 may be integrally mounted on the output shaft 120. In this implementation, the second clutch 1313 and the third clutch 1328 are mounted as a single unit after integration, thereby saving more space. In addition, the second clutch 1313 and the third clutch 1328 may rotate independently relative to each other. When the two clutches engage the first driven gear 1312 and the fourth driven gear 1327, a system may separately execute an engine independent drive mode and a first motor independent drive mode. When the two clutches transmit power simultaneously, the system can execute a parallel drive mode in a target working mode.

According to this embodiment, refer to FIG. 9. In the engine independent drive mode, a first clutch 151 is disengaged, the second clutch 1313 is engaged, the third clutch 1328 is disengaged, and power of an engine 200 is transferred to a first axle 500. In the first motor independent drive mode, the first clutch 151 is disengaged, the second clutch 1313 is disengaged, the third clutch 1328 is engaged, and power of a first motor 300 is transferred to the first axle 500. In a dual-drive parallel mode, the first clutch 151 is disengaged, the second clutch 1313 is engaged, the third clutch 1328 is engaged, and the power of the engine 200 and the power of the first motor 300 are simultaneously transferred to the first axle 500. In a second motor independent drive mode, the first clutch 151 is disengaged, the second clutch 1313 is disengaged, the third clutch 1328 is disengaged, and power of a second motor 400 is transferred to a second axle 600. In a pure-electric four-wheel drive parallel mode, the first clutch 151 is disengaged, the second clutch 1313 is disengaged, the third clutch 1328 is engaged, and the power of the first motor 300 is transferred to the first axle 500, and the power of the second motor 400 is transferred to the second axle 600. In a hybrid four-wheel drive parallel mode, the first clutch 151 is disengaged, the second clutch 1313 is engaged, the third clutch 1328 is engaged, the power of the engine 200 and the power of the first motor 300 are simultaneously transferred to the first axle 500, and the power of the second motor 400 is transferred to the second axle 600. In a parking power generation mode, the first clutch 151 is engaged, the second clutch 1313 is disengaged, the third clutch 1328 is disengaged, and the power of the engine 200 is transferred to the first motor 300 to charge the first motor 300. In a series mode, the first clutch 151 is engaged, the second clutch 1313 is disengaged, the third clutch 1328 is disengaged, the power of the engine 200 is transferred to the first motor 300 to charge the first motor 300, and the power of the second motor 400 is transferred to the second axle 600.

Correspondingly, as shown in FIG. 4, after step S102 is performed, when the matched target working mode is the engine independent drive mode, step S1033 may be performed, that is, the first clutch 151 may be controlled to disengage the first shaft section 111 from the second shaft section 112, so that operation of the engine 200 connected to the first shaft section 111 does not cause drag losses to the first motor 300.

In step S1033, more specifically, the first clutch 151 is controlled to disengage, the second clutch 1313 is controlled to engage the first driven gear 1312 with the output shaft 120, and the third clutch 1328 is controlled to disengage. In this case, the power output by the engine 200 is transferred from the first gear set 131 to the output shaft 120, and the power transmitted by the engine 200 does not interfere with the first motor 300, thereby avoiding occurrence of drag losses in a motor path.

### Embodiment 3

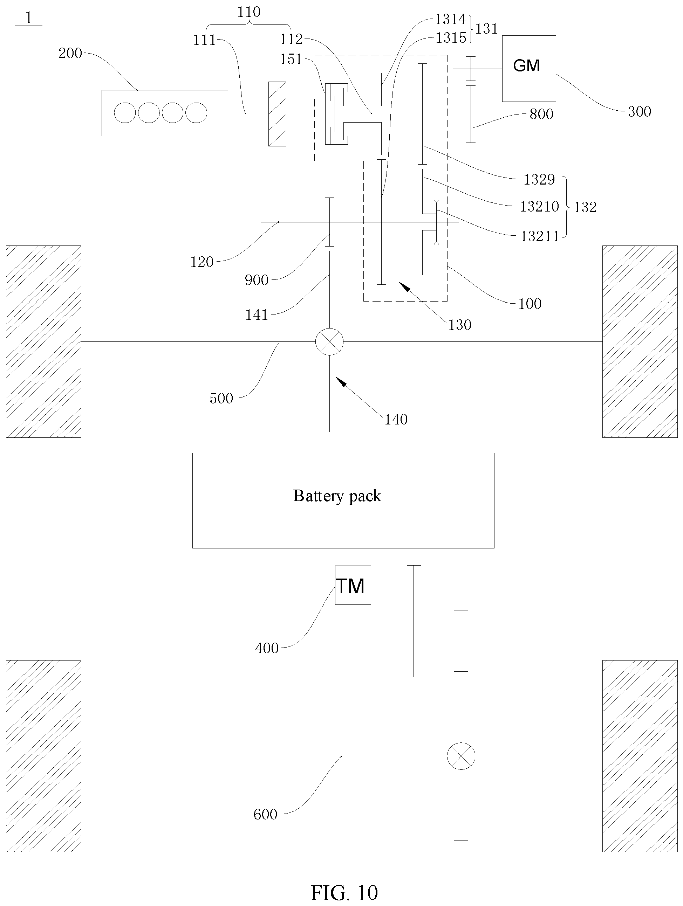

As shown in FIG. 10, a first clutch 151 may be a dual clutch. In this case, a first gear set 131 may include a fifth driving gear 1314 and a fifth driven gear 1315. The fifth driving gear 1314 is rotationally sleeved on a second shaft section 112, and can selectively engage a first shaft section 111 through the first clutch 151. The fifth driven gear 1315 is torsionally resistant sleeved on an output shaft 120 and meshes with the fifth driving gear 1314. When the first clutch 151 engages the fifth driving gear 1314 with the first shaft section 111, power of an engine 200 may be output to the output shaft 120 through the first gear set 131 to execute an engine independent drive mode in which a motor path has no drag loss.

Herein, the dual clutch is common configuration in this field, and a specific structure of the dual clutch is not described herein again. Disposition of the dual clutch can further save internal space of a hybrid power transmission apparatus 100.

Specifically, a second gear set 132 may include a sixth driving gear 1329, a sixth driven gear 13210, and a second synchronizer 13211. The sixth driving gear 1329 is torsionally resistant sleeved on the second shaft section 112. The sixth driven gear 13210 is rotationally sleeved on the output shaft 120 and meshes with the sixth driving gear 1329. A second synchronizer 13211 may selectively engage the sixth driven gear 13210 with the output shaft 120. When the second synchronizer 13211 engages the second gear set 132 with the output shaft 120, power of a first motor 300 may be output to the output shaft 120.

According to this embodiment, refer to FIG. 10. In the engine independent drive mode, the first clutch 151 is engaged with the first gear set 131, the first clutch 151 is disengaged from the second shaft section 112, the second synchronizer 13211 is disengaged, and the power of the engine 200 is transferred to a first axle 500. In a first motor independent drive mode, the first clutch 151 is disengaged from the first gear set 131, the first clutch 151 is disengaged from the second shaft section 112, the second synchronizer 13211 is engaged, and the power of the first motor 300 is transferred to the first axle 500. In a dual-drive parallel mode, the first clutch 151 is engaged with the first gear set 131, the first clutch 151 is disengaged from the second shaft section 112, the second synchronizer 13211 is engaged, and the power of the engine 200 and the power of the first motor 300 are simultaneously transferred to the first axle 500. In a second motor independent drive mode, the first clutch 151 is disengaged from the first gear set 131, the first clutch 151 is disengaged from the second shaft section 112, the second synchronizer 13211 is disengaged, and power of a second motor 400 is transferred to a second axle 600. In a pure-electric four-wheel drive parallel mode, the first clutch 151 is disengaged from the first gear set 131, the first clutch 151 is disengaged from the second shaft section 112, the second synchronizer 13211 is engaged, the power of the first motor 300 is transferred to the first axle 500, and the power of the second motor 400 is transferred to the second axle 600. In a hybrid four-wheel drive parallel mode, the first clutch 151 is engaged with the first gear set 131, the first clutch 151 is disengaged from the second shaft section 112, the second synchronizer 13211 is engaged, the power of the engine 200 and the power of the first motor 300 are simultaneously transferred to the first axle 500, and the power of the second motor 400 is transferred to the second axle 600. In a parking power generation mode, the first clutch 151 is disengaged from the first gear set 131, the first clutch 151 is engaged with the second shaft section 112, the second synchronizer 13211 is disengaged, and the power of the engine 200 is transferred to the first motor 300 to charge the first motor 300. In a series mode, the first clutch 151 is disengaged from the first gear set 131, the first clutch 151 is engaged with the second shaft section 112, the second synchronizer 13211 is disengaged, the power of the engine 200 is transferred to the first motor 300 to charge the first motor 300, and the power of the second motor 400 is transferred to the second axle 600.

Correspondingly, as shown in FIG. 4, after step S102 is performed, when a matched target working mode is the engine independent drive mode, step S1032 may be performed, that is, the first clutch 151 may be controlled to disengage the first shaft section 111 from the second shaft section 112, so that operation of the engine 200 connected to the first shaft section 111 does not cause drag losses to the first motor 300.

In step S1033, more specifically, the first clutch 151 is controlled to disengage from the second shaft section 112, the first clutch 151 is controlled to engage the fifth driving gear 1314, and the second synchronizer 13211 is controlled to disengage. In this case, the power output by the engine 200 is transferred from the first gear set 131 to the output shaft 120. In addition, the power transmitted by the engine 200 does not interfere with the first motor 300, thereby avoiding occurrence of drag losses in a motor path.

### Second implementation

### Embodiment 4

In this implementation, one clutch may be disposed on each of two different shaft sections of an input shaft 110, and two clutches may independently output power to an output shaft 120 through a shaft sleeve-like structure.

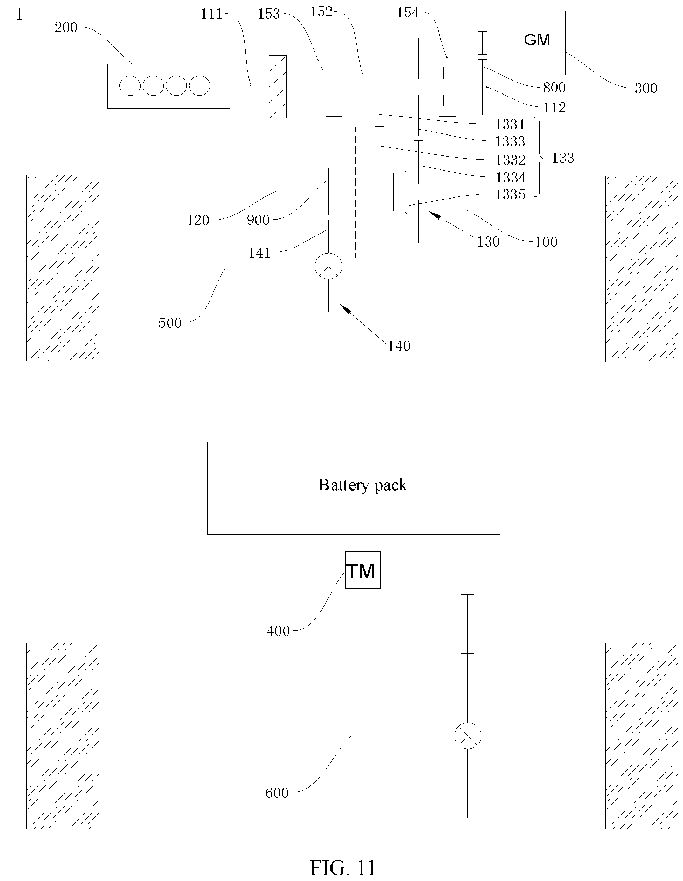

As shown in FIG. 11, a hybrid power transmission apparatus may include a shaft sleeve 152, a fourth clutch 153, and a fifth clutch 154. The shaft sleeve 152 can be rotationally sleeved on a first shaft section 111 or a second shaft section 112. The fourth clutch 153 and the fifth clutch 154 can selectively engage the first shaft section 111 and the second shaft section 112 respectively with the shaft sleeve 152. When the fourth clutch 153 is engaged with the shaft sleeve 152, and the fifth clutch 154 is not engaged with the shaft sleeve 152, an engine 200 independently outputs power to the output shaft 120, and a system executes an engine independent drive mode in a target working mode. When the fourth clutch 153 is not engaged with the shaft sleeve 152, and the fifth clutch 154 is engaged with the shaft sleeve 152, a first motor 300 independently outputs power to the output shaft 120, and the system executes a first motor independent drive mode in the target working mode. When the fourth clutch 153 and the fifth clutch 154 are both engaged with the shaft sleeve 152, the engine 200 and the first motor 300 simultaneously output power to the output shaft 120, and the system executes a parallel drive mode in the target working mode.

For example, as shown in FIG. 11, a first drivetrain 130 may include a third gear set 133 connected between the shaft sleeve 152 and the output shaft 120.

According to some embodiments, as shown in FIG. 11, the third gear set 133 may include a seventh driving gear 1331, a seventh driven gear 1332, an eighth driving gear 1333, an eighth driven gear 1334, and a third synchronizer 1335. The seventh driving gear 1331 and the eighth driving gear 1333 are torsionally resistant sleeved on the shaft sleeve 152. The seventh driven gear 1332 and the eighth driven gear 1334 are rotationally sleeved on the output shaft 120, and mesh with the seventh driving gear 1331 and the eighth driving gear 1333 respectively. The third synchronizer 1335 can only engage the seventh driven gear 1332 or the eighth driven gear 1334 with the output shaft 120 at any given time. In this embodiment, transmission ratios between one set including the seventh driving gear 1331 and the seventh driven gear 1332 and one set including the eighth driving gear 1333 and the eighth driven gear 1334 are different. The third synchronizer 1335 can separately engage the two sets, to implement gear position shifting in the target working mode. When the third synchronizer 1335 is engaged with either set, the other set remains in an idle state on the input shaft 120.

According to this embodiment, refer to FIG. 11. In the engine independent drive mode, the fourth clutch 153 is engaged, the fifth clutch 154 is disengaged, the third synchronizer 1335 is positioned in a first gear position or a second gear position, and power of the engine 200 is transferred to a first axle 500. In the first motor independent drive mode, the fourth clutch 153 is disengaged, the fifth clutch 154 is engaged, the third synchronizer 1335 is positioned in the first gear position or the second gear position, and power of the first motor 300 is transferred to the first axle 500. In a dual-drive parallel mode, the fourth clutch 153 is engaged, the fifth clutch 154 is engaged, the third synchronizer 1335 is positioned in the first gear position or the second gear position, and the power of the engine 200 and the power of the first motor 300 are simultaneously transferred to the first axle 500. In a second motor independent drive mode, the fourth clutch 153 is disengaged, the fifth clutch 154 is disengaged, the third synchronizer 1335 is in a neutral state, and power of a second motor 400 is transferred to a second axle 600. In a pure-electric four-wheel drive parallel mode, the fourth clutch 153 is disengaged, the fifth clutch 154 is engaged, the third synchronizer 1335 is positioned in the first gear position or the second gear position, the power of the first motor 300 is transferred to the first axle 500, and the power of the second motor 400 is transferred to the second axle 600. In a hybrid four-wheel drive parallel mode, the fourth clutch 153 is engaged, the fifth clutch 154 is engaged, the third synchronizer 1335 is positioned in the first gear position or the second gear position, and the power of the engine 200 and the power of the first motor 300 are simultaneously transferred to the first axle 500, and the power of the second motor 400 is transferred to the second axle 600. In a parking power generation mode, the fourth clutch 153 is engaged, the fifth clutch 154 is engaged, the third synchronizer 1335 is in the neutral state, and the power of the engine 200 is transferred to the first motor 300 to charge the first motor 300. In a series mode, the fourth clutch 153 is engaged, the fifth clutch 154 is engaged, the third synchronizer 1335 is in the neutral state, the power of the engine 200 is transferred to the first motor 300 to charge the first motor 300, and the power of the second motor 400 is transferred to the second axle 600.

Correspondingly, as shown in FIG. 6, after step S102 is performed, when the matched target working mode is the engine independent drive mode, step S1035 may be performed, that is, the shaft sleeve 152 may be controlled to engage the first shaft section 111 and disengage from the second shaft section 112, so that operation of the engine 200 does not cause drag losses to first motor 300.

In step S1035, more specifically, the fourth clutch 153 is controlled to engage the shaft sleeve 152 with the first shaft section 111, the fifth clutch 154 is controlled to disengage the shaft sleeve 152 from the second shaft section 112, and the third synchronizer 1335 is controlled to engage the seventh driven gear 1332 or the eighth driven gear 1334. In this case, the power output by the engine 200 is transferred to the output shaft 120 from the third gear set 133, and the power transmitted by the engine 200 does not interfere with the first motor 300, thereby avoiding occurrence of drag losses in a motor path.

### Third implementation

### Embodiment 5

In this implementation, two different shaft sections of an input shaft 110 may be rotationally sleeved on each other, and when the two shaft sections are connected to different power sources (for example, an engine 200 and a first motor 300), the different power sources are independent of each other and do not interfere with each other when outputting power. This can effectively avoid occurrence of drag losses between the different power sources.

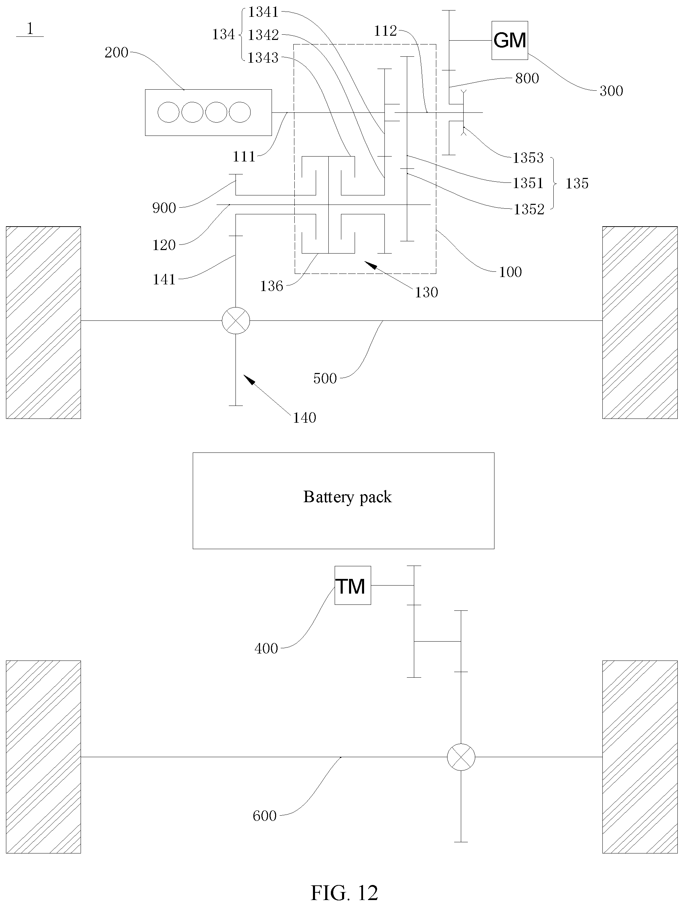

As shown in FIG. 12, one of a first shaft section 111 and a second shaft section 112 is rotationally sleeved on the other; and a first drivetrain 130 includes a fourth gear set 134 connected between the first shaft section 111 and an output shaft 120, and a fifth gear set connected between the second shaft section 112 and the output shaft 120, where the fourth gear set 134 and the fifth gear set 135 can selectively transmit power to the output shaft 120 separately. In this embodiment, the first shaft section 111 and the second shaft section 112 are not directly connected, but may be connected by using the output shaft 120 through the fourth gear set 134 and the fifth gear set 135, to transmit power to the output shaft 120.

For example, as shown in FIG. 12, the first drivetrain 130 may include a sixth clutch 136 that can selectively engage an output gear 900 that is rotationally sleeved on the output shaft 120 with the output shaft 120. When the sixth clutch 136 is engaged, the output shaft 120 may establish a connection to the output gear 900. In this case, the output gear 900 may receive power from the output shaft 120 and output the power to a first axle 500.

According to some embodiments, as shown in FIG. 12, the fourth gear set 134 may further include a ninth driving gear 1341, a ninth driven gear 1342, and a seventh clutch 1343. The ninth driving gear 1341 is torsionally resistant sleeved on the first shaft section 111. The ninth driven gear 1342 is rotationally sleeved on the output shaft 120 and meshes with the ninth driving gear 1341. The seventh clutch 1343 may selectively engage the ninth driven gear 1342 with the output shaft 120. When the seventh clutch 1343 is engaged with the ninth driven gear 1342, the power of the engine 200 may be transferred to the output shaft 120.

The sixth clutch 136 and the seventh clutch 1343 may be integrally mounted on the output shaft 120. In this implementation, the sixth clutch 136 and the seventh clutch 1343 are integrally mounted on the output shaft 120, thereby saving more space. In addition, the sixth clutch 136 and the seventh clutch 1343 may rotate independently relative to each other, and when the sixth clutch 136 is engaged with the output gear 900 and the seventh clutch 1343 is engaged with the ninth driven gear 1342, the power output by the engine 200 may be transferred to the first axle 500. A system may implement an engine independent drive mode.

According to some embodiments, as shown in FIG. 12, the fifth gear set 135 may include a tenth driving gear 1351, a tenth driven gear 1352, and a fourth synchronizer 1353. The tenth driving gear 1351 may be torsionally resistant sleeved on the second shaft section 112. The tenth driven gear 1352 may be torsionally resistant sleeved on the output shaft 120 and mesh with the tenth driving gear 1351. The fourth synchronizer 1353 can selectively engage the input gear 800 that is rotationally sleeved on the second shaft section 112 with the second shaft section 112. When the fourth synchronizer 1353 is engaged, the sixth clutch 136 is engaged, and the seventh clutch 1343 is disengaged, the first motor 300 can output power to the output shaft 120 through the fifth gear set 135, and in this case, the system can implement a first motor independent drive mode. When the fourth synchronizer 1353 is engaged, the sixth clutch 136 is engaged, and the seventh clutch 1343 is engaged, the engine 200 and the first motor 300 can simultaneously output power to the output shaft 120. In this case, the system can implement a dual-drive parallel mode or a four-wheel drive mode. When the fourth synchronizer 1353 is engaged, the sixth clutch 136 is disengaged, and the seventh clutch 1343 is engaged, the power output by the engine 200 may be transferred to the first motor 300. In this case, the system may implement a parking power generation mode and a series mode.

According to this embodiment, refer to FIG. 12. In the engine independent drive mode, the sixth clutch 136 is engaged, the seventh clutch 1343 is engaged, the fourth synchronizer 1353 is disengaged, and the power of the engine 200 is transferred to the first axle 500. In the first motor independent drive mode, the sixth clutch 136 is engaged, the seventh clutch 1343 is disengaged, the fourth synchronizer 1353 is engaged, and the power of the first motor 300 is transferred to the first axle 500. In the dual-drive parallel mode, the sixth clutch 136 is engaged, the seventh clutch 1343 is engaged, the fourth synchronizer 1353 is engaged, and the power of the engine 200 and the power of the first motor 300 are simultaneously transferred to the first axle 500. In a second motor independent drive mode, the sixth clutch 136 is disengaged, the seventh clutch 1343 is disengaged, the fourth synchronizer 1353 is disengaged, and the power of the second motor 400 is transferred to a second axle 600. In a pure-electric four-wheel drive parallel mode, the sixth clutch 136 is engaged, the seventh clutch 1343 is disengaged, the fourth synchronizer 1353 is engaged, and the power of the first motor 300 is transferred to the first axle 500, and the power of the second motor 400 is transferred to the second axle 600. In a hybrid four-wheel drive parallel mode, the sixth clutch 136 is engaged, the seventh clutch 1343 is engaged, the fourth synchronizer 1353 is engaged, the power of the engine 200 and the power of the first motor 300 are simultaneously transferred to the first axle 500, and the power of the second motor 400 is transferred to the second axle 600. In the parking power generation mode, the sixth clutch 136 is disengaged, the seventh clutch 1343 is engaged, the fourth synchronizer 1353 is engaged, and the power of the engine 200 is transferred to the first motor 300 to charge the first motor 300. In the series mode, the sixth clutch 136 is disengaged, the seventh clutch 1343 is engaged, the fourth synchronizer 1353 is engaged, the power of the engine 200 is transferred to the first motor 300 to charge the first motor 300, and the power of the second motor 400 is transferred to the second axle 600.

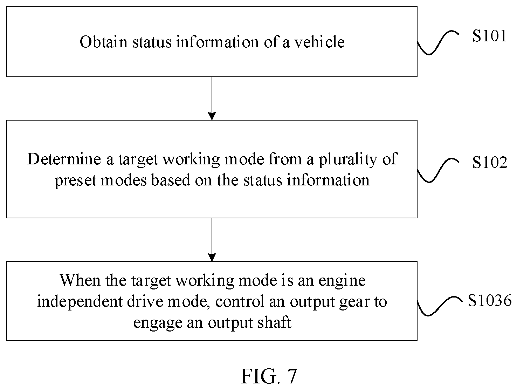

Correspondingly, as shown in FIG. 7, after step S102 is performed, when a matched target working mode is the engine independent drive mode, step S1036 may be performed, that is, the output gear 900 may be controlled to engage the output shaft 120, so that power output by the engine 200 may be transferred to the first axle 500 through the output gear 900.

In step S1036, more specifically, the sixth clutch 136 is controlled to engage the output gear 900, the seventh clutch 1343 is controlled to engage the ninth driven gear 1342, and the fourth synchronizer 1353 is controlled to disengage. In this case, the power output by the engine 200 is transferred to the output shaft 120 from the fourth gear set 134, and the power transmitted by the engine 200 does not interfere with the first motor 300, thereby avoiding occurrence of drag losses in the motor path.

As shown in FIG. 8 to FIG. 12, in some embodiments, the output shaft 120 may alternatively be connected to an axle through a second drivetrain 140. The second drivetrain 140 may include a sixth gear set 141 connected between the output shaft 120 and the axle, and the sixth gear set 141 may include the output gear 900. The output gear 900 can receive the power of the output shaft 120, and output the power to the axle through another transmission structure of the sixth gear set 141, to drive the axle and a wheel on the axle.

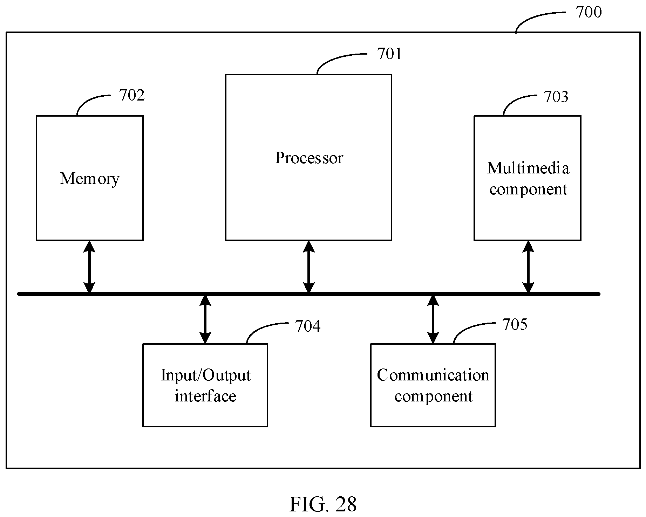

FIG. 28 is a block diagram of a vehicle control unit according to an example embodiment. As shown in FIG. 28, the vehicle control unit 700 may include: a processor 701 and a memory 702. The vehicle control unit 700 may further include one or more of the following: a multimedia component 703, an input/output interface 704, and a communication component 705.

The processor 701 is configured to control an overall operation on the vehicle control unit 700, to complete all or some of the steps in the foregoing vehicle control method. The memory 702 is configured to store various types of data to support operations on the vehicle control unit 700. The data may include, for example, instructions used for any application or method to operate on the vehicle control unit 700, and application-related data, such as contact data, a sent and received message, a picture, audio, or video. The memory 702 may be implemented by any type of volatile or non-volatile storage device or a combination thereof, for example, a static random access memory (Static Random Access Memory, SRAM for short), an electrically erasable programmable read-only memory (Electrically Erasable Programmable Read-Only Memory, EEPROM for short), an erasable programmable read-only memory (Erasable Programmable Read-Only Memory, EPROM for short), a programmable read-only memory (Programmable Read-Only Memory, PROM for short), a read-only memory (Read-Only Memory, ROM for short), a magnetic memory, a flash memory, a magnetic disk, or an optical disc. The multimedia component 703 may include a display and an audio component. The display may be, for example, a touchscreen, and the audio component is configured to output and/or input an audio signal. For example, the audio component may include one microphone that is configured to receive an external audio signal. The received audio signal may be further stored in the memory 702 or sent through the communication component 705. The audio component further includes at least one speaker that is configured to output an audio signal. The input/output interface 704 provides an interface between the processor 701 and other interface modules. The other interface modules may be keyboards, mice, buttons, or the like. These buttons may be virtual or physical buttons. The communication component 705 is configured to perform wired or wireless communication between the vehicle control unit 700 and another device. For example, wireless communication is Wi-Fi, Bluetooth, near field communication (Near Field Communication, NFC for short), 2G, 3G, 4G, NB-IoT, eMTC, or other 5G, or one or a combination thereof. This is not limited herein. Therefore, correspondingly, the communication component 705 may include: a Wi-Fi module, a Bluetooth module, an NFC module, and the like.

In an example embodiment, the vehicle control unit 700 may be implemented by one or more of the following: an application-specific integrated circuit (Application-Specific Integrated Circuit, ASIC for short), a digital signal processor (Digital Signal Processor, DSP for short), a digital signal processing device (Digital Signal Processing Device, DSPD for short), a programmable logic device (Programmable Logic Device, PLD for short), a field programmable gate array (Field Programmable Gate Array, FPGA for short), a controller, a microcontroller, a microprocessor, or another electronic component, and is configured to perform the foregoing vehicle control method.

In another example embodiment, a computer-readable storage medium including program instructions is further provided. When the program instructions are executed by the processor, the steps of the foregoing vehicle control method are implemented. For example, the computer-readable storage medium may be the memory 702 including the program instructions, and the program instructions may be executed by the processor 701 of the vehicle control unit 700 to complete the foregoing vehicle control method.

The foregoing describes preferred implementations of the present disclosure in detail with reference to the accompanying drawings. However, the present disclosure is not limited to specific details in the foregoing implementations. Within the scope of the technical concept of the present disclosure, a plurality of simple variations may be made to the technical solution of the present disclosure, and all these simple variations fall within the protection scope of the present disclosure.

In addition, it should be noted that the specific technical features described in the foregoing specific implementations may be combined in any appropriate manner when there is no contradiction. To avoid unnecessary repetition, various possible combination manners are not separately described in the present disclosure.

In addition, different implementations of the present disclosure may be randomly combined, and should also be considered as disclosed in the present disclosure provided that such combinations do not depart from the idea of the present disclosure.

## Claims

1. A hybrid power transmission apparatus (100), comprising:
an input shaft (110), comprising a first shaft section (111) for connecting to an engine (200) and a second shaft section (112) for connecting to a first motor (300); and
an output shaft (120), connected to the input shaft (110) through a first drivetrain (130), wherein
the first shaft section (111) and the second shaft section (112) are selectively engaged or disengaged, so that the engine (200) is decoupled from the first motor (300) in at least one target working mode in which the engine (200) outputs power.

2. The hybrid power transmission apparatus (100) according to claim 1, further comprising a first clutch (151) that selectively engages the first shaft section (111) with the second shaft section (112).

3. The hybrid power transmission apparatus (100) according to claim 2, wherein the first drivetrain (130) comprises a first gear set (131) connected between the first shaft section (111) and the output shaft (120), and a second gear set (132) connected between the second shaft section (112) and the output shaft (120), wherein
the first gear set (131) and the second gear set (132) selectively transmit power to the output shaft (120) separately.

4. The hybrid power transmission apparatus (100) according to claim 3, wherein the first gear set (131) comprises:
a first driving gear (1311), torsionally resistant sleeved on the first shaft section (111);
a first driven gear (1312) that is rotationally sleeved on the output shaft (120) and meshes with the first driving gear (1311); and
a second clutch (1313), configured to selectively engage the first driven gear (1312) with the output shaft (120).

5. The hybrid power transmission apparatus (100) according to claim 3 or 4, wherein the second gear set (132) comprises:
a second driving gear (1321), torsionally resistant sleeved on the second shaft section (112);
a second driven gear (1322) that is rotationally sleeved on the output shaft (120) and meshes with the second driving gear (1321);
a third driving gear (1323), torsionally resistant sleeved on the second shaft section (112);
a third driven gear (1324) that is rotationally sleeved on the output shaft (120) and meshes with the third driving gear (1323); and
a first synchronizer (1325), configured to engage at most one of the second driven gear (1322) and the third driven gear (1324) with the output shaft (120).

6. The hybrid power transmission apparatus (100) according to claim 4, wherein the second gear set (132) comprises:
a fourth driving gear (1326), torsionally resistant sleeved on the second shaft section (112);
a fourth driven gear (1327) that is rotationally sleeved on the output shaft (120) and meshes with the fourth driving gear (1326); and
a third clutch (1328), configured to selectively engage the fourth driven gear (1327) with the output shaft (120).

7. The hybrid power transmission apparatus (100) according to claim 6, wherein the second clutch (1313) and the third clutch (1328) are integrally mounted on the output shaft (120).

8. The hybrid power transmission apparatus (100) according to claim 3, wherein the first clutch (151) is a dual clutch, and the first gear set (131) comprises:
a fifth driving gear (1314) that is rotationally sleeved on the second shaft section (112) and is selectively engaged with the first shaft section (111) through the first clutch (151); and
a fifth driven gear (1315) that is torsionally resistant sleeved on the output shaft (120) and meshes with the fifth driving gear (1314).

9. The hybrid power transmission apparatus (100) according to claim 3 or 8, wherein the second gear set (132) comprises:
a sixth driving gear (1329), torsionally resistant sleeved on the second shaft section (112);
a sixth driven gear (13210) that is rotationally sleeved on the output shaft (120) and meshes with the sixth driving gear (1329); and
a second synchronizer (13211), configured to selectively engage the sixth driven gear (13210) with the output shaft (120).

10. The hybrid power transmission apparatus (100) according to claim 1, further comprising:
a shaft sleeve (152), rotationally sleeved on the first shaft section (111) or the second shaft section (112);
a fourth clutch (153) that selectively engages the shaft sleeve (152) with the first shaft section (111); and
a fifth clutch (154) that selectively engages the shaft sleeve (152) with the second shaft section (112).

11. The hybrid power transmission apparatus (100) according to claim 10, wherein the first drivetrain (130) comprises a third gear set (133) connected between the shaft sleeve (152) and the output shaft (120).

12. The hybrid power transmission apparatus (100) according to claim 11, wherein the third gear set (133) comprises:
a seventh driving gear (1331), torsionally resistant sleeved on the shaft sleeve (152);
a seventh driven gear (1332) that is rotationally sleeved on the output shaft (120) and meshes with the seventh driving gear (1331);
an eighth driving gear (1333), torsionally resistant sleeved on the shaft sleeve (152);
an eighth driven gear (1334) that is rotationally sleeved on the output shaft (120) and meshes with the eighth driven gear (1334); and
a third synchronizer (1335), configured to engage at most one of the seventh driven gear (1332) and the eighth driven gear (1334) with the output shaft (120).

13. The hybrid power transmission apparatus (100) according to claim 1, wherein one of the first shaft section (111) and the second shaft section (112) is rotationally sleeved on the other; and the first drivetrain (130) comprises a fourth gear set (134) connected between the first shaft section (111) and the output shaft (120), and a fifth gear set (135) connected between the second shaft section (112) and the output shaft (120), wherein
the fourth gear set (134) and the fifth gear set (135) selectively transmit power to the output shaft (120) separately.

14. The hybrid power transmission apparatus (100) according to claim 13, wherein the first drivetrain (130) comprises:
a sixth clutch (136), configured to selectively engage an output gear (900) that is rotationally sleeved on the output shaft (120) with the output shaft (120).

15. The hybrid power transmission apparatus (100) according to claim 14, wherein the fourth gear set (134) comprises:
a ninth driving gear (1341), torsionally resistant sleeved on the first shaft section (111);
a ninth driven gear (1342) that is rotationally sleeved on the output shaft (120) and meshes with the ninth driving gear (1341); and
a seventh clutch (1343), configured to selectively engage the ninth driven gear (1342) with the output shaft (120).

16. The hybrid power transmission apparatus (100) according to claim 15, wherein the sixth clutch (136) and the seventh clutch (1343) are integrally mounted on the output shaft (120).

17. The hybrid power transmission apparatus (100) according to any one of claims 14 to 16, wherein the fifth gear set (135) comprises:
a tenth driving gear (1351), torsionally resistant sleeved on the second shaft section (112);
a tenth driven gear (1352) that is torsionally resistant sleeved on the output shaft (120) and meshes with the tenth driving gear (1351); and
a fourth synchronizer (1353), configured to selectively engage an input gear (800) that is rotationally sleeved on the second shaft section (112) with the second shaft section (112).

18. The hybrid power transmission apparatus (100) according to claim 17, wherein the output shaft (120) is configured to be connected to an axle through a second drivetrain (140), and the second drivetrain (140) comprises a sixth gear set (141) connected between the output shaft (120) and the axle.

19. A hybrid power system, comprising:
an engine (200),
a first motor (300), and
the hybrid power transmission apparatus (100) according to any one of claims 1 to 18.

20. The hybrid power system according to claim 19, further comprising a second motor (400), wherein the engine (200) and the first motor (300) are configured to transmit power to a first axle (500); and the second motor (400) is configured to output power to a second axle (600).

21. The hybrid power system according to claim 20, wherein the first motor (300) is a GM motor, and the second motor (400) is a TM motor.

22. A vehicle control method, applied to a vehicle (1) having a hybrid power system, wherein the hybrid power system comprises an engine (200), a first motor (300), and a hybrid power transmission apparatus (100), and the vehicle control method comprises:
obtaining status information of the vehicle (1);
determining a target working mode from a plurality of preset modes based on the status information; and
controlling an operating status of the hybrid power system based on the target working mode, wherein the engine (200) is decoupled from the first motor (300) in at least one target working mode in which the engine (200) outputs power.

23. The vehicle control method according to claim 22, wherein the hybrid power transmission apparatus (100) comprises:
an input shaft (110), comprising a first shaft section (111) for connecting to the engine (200) and a second shaft section (112) for connecting to the first motor (300), wherein
the first shaft section (111) and the second shaft section (112) are selectively engaged or disengaged; and
when the target working mode is an engine (200) independent drive mode, the controlling an operating status of the hybrid power system based on the target working mode comprises:
controlling the first shaft section (111) to disengage from the second shaft section (112).

24. The vehicle control method according to claim 23, wherein the hybrid power transmission apparatus (100) comprises a first clutch (151) that selectively engages the first shaft section (111) with the second shaft section (112); and
when the target working mode is the engine (200) independent drive mode, the controlling an operating status of the hybrid power system based on the target working mode comprises:
controlling the first clutch (151) to disengage the first shaft section (111) from the second shaft section (112).

25. The vehicle control method according to claim 24, wherein the hybrid power transmission apparatus (100) comprises an output shaft (120) that is connected to the input shaft (110) through a first drivetrain (130); the first drivetrain (130) comprises a first gear set (131) connected between the first shaft section (111) and the output shaft (120), and a second gear set (132) connected between the second shaft section (112) and the output shaft (120), wherein the first gear set (131) and the second gear set (132) selectively transmit power to the output shaft (120) separately; and
when the target working mode is the engine (200) independent drive mode, the controlling an operating status of the hybrid power system based on the target working mode comprises:
controlling power transfer between the first gear set (131) and the output shaft (120), and controlling power disconnection between the second gear set (132) and the output shaft (120).

26. The vehicle control method according to claim 23, wherein the hybrid power transmission apparatus (100) comprises:
a shaft sleeve (152), rotationally sleeved on the first shaft section (111) or the second shaft section (112);
a fourth clutch (153) that selectively engages the shaft sleeve (152) with the first shaft section (111); and
a fifth clutch (154) that selectively engages the shaft sleeve (152) with the second shaft section (112); and
when the target working mode is the engine (200) independent drive mode, the controlling an operating status of the hybrid power system based on the target working mode comprises:
controlling the fourth clutch (153) to engage the shaft sleeve (152) with the first shaft section (111) and controlling the fifth clutch (154) to disengage the shaft sleeve (152) from the second shaft section (112).

27. The vehicle control method according to claim 25, wherein the first drivetrain (130) comprises:
a sixth clutch (136), configured to selectively engage an output gear (900) that is rotationally sleeved on the output shaft (120) with the output shaft (120); and
when the target working mode is the engine (200) independent drive mode, the controlling an operating status of the hybrid power system based on the target working mode comprises:
controlling the sixth clutch (136) to engage the output gear (900) with the output shaft (120).

28. The vehicle control method according to any one of claims 23 to 27, wherein the hybrid power system further comprises a second motor (400); the engine (200) and the first motor (300) are configured to transmit power to a first axle (500); and the second motor (400) is configured to output power to a second axle (600); and
when the target working mode is a four-wheel drive parallel mode, the controlling an operating status of the hybrid power system based on the target working mode comprises:
controlling the first shaft section (111) to disengage from the second shaft section (112), controlling the engine (200) to drive the first axle (500), and controlling the second motor (400) to drive the second axle (600).

29. The vehicle control method according to claim 22, wherein the status information comprises an SOC value of a battery, required power of a wheel end, and required torque of the wheel end; and
the determining a target working mode from a plurality of preset modes based on the status information comprises:
determining the target working mode based on the SOC value, the required power, and the required torque.

30. A computer-readable storage medium, wherein the computer-readable storage medium stores a computer program, and when the program is executed by a processor (701), the steps of the vehicle control method according to any one of claims 22 to 29 are implemented.

31. A vehicle control unit (700), comprising:
a memory (702), storing a computer program; and
a processor (701), configured to execute the computer program in the memory (702), to implement the steps of the vehicle control method according to any one of claims 22 to 29.

32. A vehicle (1), comprising the hybrid power system according to any one of claims 19 to 21 or the vehicle control unit (700) according to claim 31.
